# EUROPÄISCHE PATENTSCHRIFT

(11) **EP 3 194 486 B1**
(45) Veröffentlichungstag und Bekanntmachung des Hinweises auf die Patenterteilung: **24.04.2019**
(21) Anmeldenummer: 15771538.4
(22) Anmeldetag: 16.09.2015
(51) Int. Cl.: C08K 5/3417, C08K 5/3492, C08K 5/5317, C08K 5/5393, C08K 5/5399, C08K 5/56, C09K 21/10, C09K 21/12, C08L 23/12

(54) **VERWENDUNG VON ORGANISCHEN OXYIMIDSALZEN ALS FLAMMSCHUTZMITTEL, FLAMMENGESCHÜTZTE KUNSTSTOFFZUSAMMENSETZUNG, VERFAHREN ZU IHRER HERSTELLUNG SOWIE FORMTEIL, LACK ODER BESCHICHTUNG**
USE OF ORGANIC OXYIMIDE SALTS AS FLAMERETARDANTS; FLAMERETARDANT PLASTIC COMPOSITIONS; PROCESS TO PRODUCE SAID COMPOSITIONS AND MOULDINGS, PAINTS OR COATINGS
UTILISATION DE SELS D'OXYMIDES ORGANIQUES COMME RETARDATEURS DE FLAMME, COMPOSITION DE MATIÈRES PLASTIQUES IGNIFUGÉE, PROCÉDÉ POUR LES PRODUIRE AINSI QUE PIÈCE MOULÉE, VERNIS OU REVÊTEMENT

(30) Priorität: 18.09.2014 DE 102014218810
(43) Veröffentlichungstag der Anmeldung: 26.07.2017
(73) Patentinhaber: Fraunhofer-Gesellschaft zur Förderung der angewandten Forschung e.V., 80686 München (DE)
(72) Erfinder: PFAENDNER, Rudolf, 64668 Rimbach (DE); MAZUROWSKI, Markus, 65462 Ginsheim-Gustav (DE)
(74) Vertreter: Pfenning, Meinig & Partner mbB
(86) Internationale Anmeldenummer: PCT/EP2015/071254
(87) Internationale Veröffentlichungsnummer: WO 2016/042043

(56) Entgegenhaltungen:
- WO-A1-2006/051047
- WO-A1-2014/154636
- MOHAMMAD G DEKAMIN ET AL: "The Performance of Phthalimide-N-oxyl Anion", MONATSHEFTE FÜR CHEMIE - CHEMICAL MONTHLY ; AN INTERNATIONAL JOURNAL OF CHEMISTRY, SPRINGER-VERLAG, AU, Bd. 137, Nr. 12, 30. November 2006 (2006-11-30), Seiten 1591-1595, XP019461783, ISSN: 1434-4475, DOI: 10.1007/S00706-006-0553-6 in der Anmeldung erwähnt

## Beschreibung

Die vorliegende Erfindung betrifft die Verwendung von Salzen von organischen Oxyimiden als Flammschutzmittel für Kunststoffe sowie eine entsprechend flammgeschützte Kunststoffformmasse. Zudem betrifft die vorliegende Erfindung ein Herstellungsverfahren einer derartigen Kunststoffformmasse bzw. ein hieraus hergestelltes Formteil, Lack oder eine Beschichtung.

Die meisten Kunststoffe sind brennbar und vergleichsweise leicht entflammbar. Um das Brandrisiko von Kunststoffen in bestimmten Anwendungen zu vermindern oder auszuschließen ist es deshalb zwingend erforderlich die Entflammbarkeit zu verringern und flammfeste Kunststoffzusammensetzungen einzusetzen. Dazu werden in der Regel Flammschutzmittel dem Kunststoff beigegeben mit dem Ziel, das Entzünden für eine bestimmte Zeit zu verhindern oder die Brandausbreitung signifikant zu verzögern. Traditionelle Flammschutzmittel basieren auf chlor- und bromhaltigen Verbindungen (letztere meist in Kombination mit Antimontrioxid), auf phosphorhaltigen, auf stickstoffhaltigen Verbindungen und auf Metallydroxiden wie Aluminiumhydroxid (ATH) oder Magnesiumhydroxid (MDH). In neuerer Zeit werden aus toxikologischen und ökotoxikologischen Gründen halogenfreie Flammschutzlösungen bevorzugt.

Zur Herstellung von flammgeschützten Kunststoffen gibt es eine Vielzahl von Flammschutzmitteln , die in der Regel substratspezifisch für ein bestimmtes Polymer und einen bestimmten Einsatzbereich entsprechend den dafür zugrundeliegenden nationalen und internationalen Normen eingesetzt werden. Flammgeschützte Kunststoffe werden beispielsweise in Elektro- und Elektronikanwendungen, im Transportbereich (Bahn, Flugzeug, Auto), bei Textilien, bei Polstermöbeln und im Bauwesen verwendet.

Eine in den letzten Jahren entwickelte neue Flammschutzmittelklasse auf Stickstoff-Basis, vorzugsweise für Polyolefine, beruht auf ausgewählten Alkoxyaminen (z.B. WO 99/00450). Durch Spaltung der Alkoxyamine entstehen im Brandfall Radikale, die in den Abbauprozess des Polymeren eingreifen und damit die Flammschutzwirkung bewirken (C. R. Wilen, R. Pfaendner, J. Appl. Pol. Sci. 2013, 129, 925-944). Außer Alkoxyaminen wurden mittlerweile auch andere Radikalgeneratoren beschrieben, die als Flammschutzmittel oder als Flammschutzmittelsynergisten wirken wie Azoverbindungen (M. Aubert et. al. Macromol. Rapid Commun. 2006, 27, 976-981, WO 2005/030852), Hydrazone und Azine (M. Aubert et al., Pol. Adv. Technol. 2011, 22, 1529-1538), Azo-Alkoxyamine (M. Aubert et al. Pol. Degr. Stab. 2012, 97, 1438-1446) Azo-Phosphonate (T. Tirri et al., Pol. Degr. Stab. 2012, 97, 375-382) oder Triazene (W. Pawelec et al., Pol. Degr. Stab. 2012, 97, 948-954).

Weiterhin ist die Verwendung von neuen Radikalgeneratoren auf der Basis von Hydroxyimiden und polymeren Imiden als Flammschutzmittel in der Patentanmeldung DE 10 2013 005 307 bzw. und der noch nicht veröffentlichten Patentanmeldung DE 10 2014 210 214 beschrieben.

Viele der bekannten und genannten Radikalgeneratoren erfüllen jedoch nicht alle Forderungen für ein wirksames Flammschutzmittel wie z.B. eine ausreichende thermische Stabilität, d.h. bei der Einarbeitung in Kunststoffe (Compoundierung) bei üblichen Temperaturen tritt bereits ein unerwünschter Abbau des Flammschutzmittels auf. Durch diesen vorzeitigen Abbau werden die Wirkung im Brandfall verringert und/oder durch Folgereaktionen die Eigenschaften des zu schützenden Kunststoffs negativ beeinflusst. Es besteht daher der Wunsch nach Radikalgeneratoren, die als Flammschutzmittel oder Flammschutzmittelsynergist eingesetzt werden können, die bei der Kunststoffverarbeitung eine ausreichend hohe Temperaturstabilität besitzen, d.h. in der Regel oberhalb von 300 °C, im Brandfall aber dann durch eine schnelle Zersetzung eine besonders gute Wirkung erreichen.

Aufgabe der vorliegenden Erfindung war es daher neue Flammschutzmittel und synergistische Flammschutzmittel-Komponenten zur Verfügung zu stellen, die hochwirksam sind und sehr gute thermische Stabilitäten aufweisen.

Diese Aufgabe wird durch die Verwendung der organischen Imidsalze gemäß Patentanspruch 1, durch eine flammgeschützte Kunststoffzusammensetzung gemäß Patentanspruch 13, durch ein Verfahren zur Herstellung einer flammgeschützten Kunststoffzusammensetzung gemäß Patentanspruch 16 sowie durch ein Formteil, Lack oder eine Beschichtung gemäß Patentanspruch 17 gelöst. Die jeweilig abhängigen Patentansprüche stellen dabei vorteilhafte Weiterbildungen dar.

Die vorliegende Erfindung betrifft somit die Verwendung von organischen Oxyimidsalzen, enthaltend mindestens ein Strukturelement der nachfolgend abgebildeten Formel I 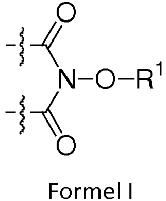 wobei R¹ ausgewählt ist aus der Gruppe bestehend aus anorganischen oder organischen Kationen, als Flammschutzmittel für Kunststoffe.

Der Begriff "organische Oxyimidsalze" ist dabei synonym zu verstehen mit Salzen, die von einem organischen Oxyimid abgeleitet sind. Derartige organische Oxyimide sind beispielsweise in der bereits zuvor erwähnten Deutschen Patentanmeldung DE 10 2013 005 307 beschrieben. Zur weiteren Erläuterung der strukturellen Prinzipien der organischen Oxyimide wird vollinhaltlich auf diese Patentanmeldung Bezug genommen. Aus diesen organischen Oxyimiden lassen sich beispielsweise durch Umsetzung mit einer Base die erfindungsgemäß verwendeten Salze der organischen Oxyimide, ergo die organischen Oxyimidsalze darstellen.

Bevorzugte Kationen R¹ werden im Folgenden beschrieben.

Die anorganischen Kationen sind dabei bevorzugt ausgewählt aus der Gruppe bestehend aus Metallkationen, bevorzugt einwertige, zweiwertige oder dreiwertige Alkalimetallkationen, Erdalkalimetallkationen, Übergangsmetallkationen und/oder Seltenerdmetallkationen, insbesondere Na⁺, K⁺, Mg²⁺, Ca²⁺, Zn²⁺ und/oder Al³⁺.

Bevorzugte organische Kationen sind insbesondere ausgewählt aus der Gruppe bestehend aus Stickstoff und/oder Phosphor enthaltenden organischen Kationen, insbesondere Ammonium-, Melaminium- und/oder Phosphoniumkationen. Die organischen Kationen können dabei niedermolekular vorliegen oder an ein Polymergerüst gebunden sein.

Ebenso sind die Kombinationen mindestens zweier verschiedener der zuvor genannten Kationen möglich, d.h. die organischen Oxyimidsalze können ebenso als gemischte Salze vorliegen. Denkbar sind dabei beispielsweise die Kombination zweier oder mehrere der anorganischen Kationen, zwei oder mehrerer der zuvor beschriebenen organischen Kationen, wie auch ein gemischtes Salz, das sowohl anorganische als auch organische Kationen aufweist. Alternativ oder zusätzlich hierzu können die vorliegende Erfindung betreffende Salze auch als gemischtes Salz mit mindestens zwei verschiedenen Anionen vorliegen. Hierbei sind beispielsweise die Kombination zweier oder mehrere der anorganischen Anionen, zwei oder mehrerer organischen Anionen, wie auch ein gemischtes Salz, das sowohl anorganische als auch organische Anion aufweist.

Besonders bevorzugt ist dabei, wenn das organische Oxyimidsalz halogen-frei ist, d.h. die entsprechende Verbindung beinhaltet keine Halogenatome.

Weiter vorteilhaft ist, wenn das organische Oxyimidsalz die nachfolgende Struktur aufweist 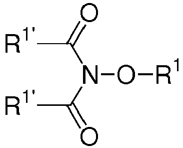 wobei R¹ wie oben stehend definiert ist und R^{1'} bei jedem Auftreten gleich oder verschieden ist und einen linearen oder verzweigten Alkylrest, einen linearen oder verzweigten Alkylenrest, einen aromatischen Rest, einen heteroaromatischen Rest darstellt oder beide Reste R^{1'} zu einem Ring verbunden sind, wobei der Ring gesättigt oder ungesättigt, substituiert oder unsubstituiert sein kann und/oder mindestens einer oder beide Reste R^{1'} oder die zu einem Ring verbundenen Resten R^{1'} eine mindestens ein weiteres Strukturelement der oben abgebildeten Formel I umfassen.

Bevorzugte Beispiele von erfindungsgemäß verwendeten organischen Oxyimidsalzen werden im Nachfolgenden beschrieben. Denkbar sind organische Oxyimidsalze, die nur ein Strukturelement der allgemeinen Formel I umfassen. Beispielshafte Verbindungen sind dabei ausgewählt aus den nachfolgend dargestellten Verbindungen

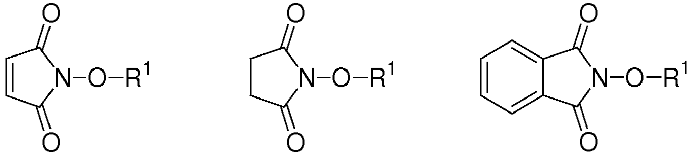

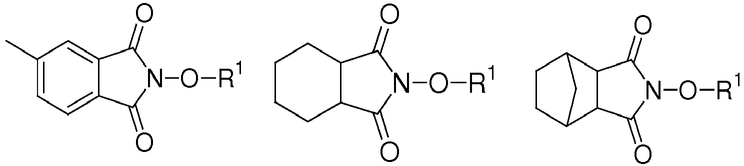

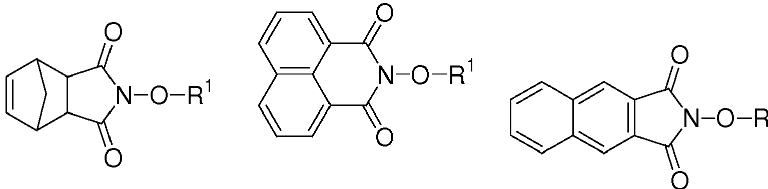

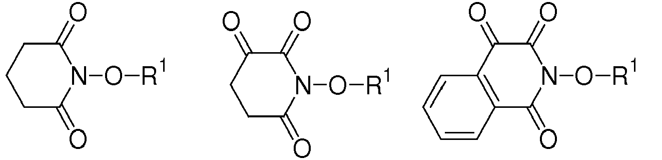

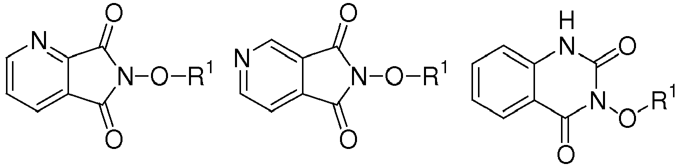

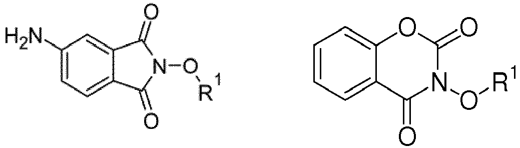

Denkbar ist ebenso, dass die Oxyimidsalze zwei Strukturelemente der allgemeinen Formel I umfassen. Möglich hierbei sind Verbindungen, die den nachfolgenden Strukturformeln entsprechen 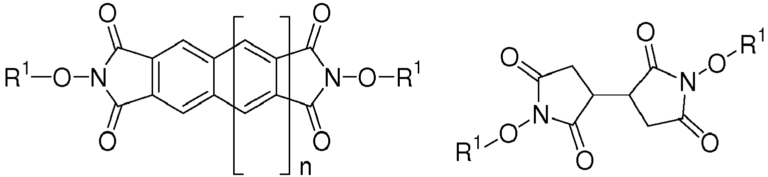 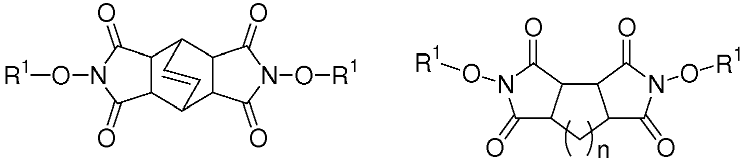 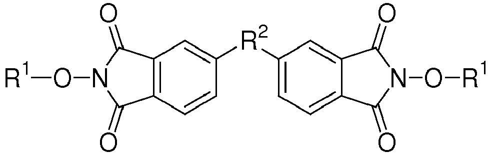 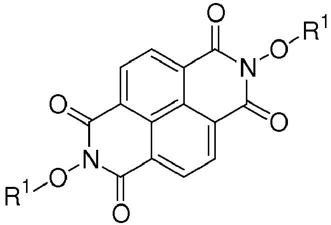 wobei
n 0, 1, 2, 3 oder 4 bedeutet, und
R² ausgewählt ist aus der Gruppe bestehend aus gegebenenfalls substituierten Alkylen-, Cycloalkylen-, Arylen-, Heteroarylen- oder verbrückenden Acyl-Resten.

Denkbar ist ebenso der Einsatz eines Oxyimidsalzes, das drei Strukturelemente der allgemeinen Formel I aufweist, gemäß der nachfolgenden Formel

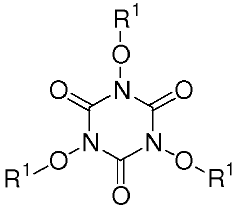

Möglich ist ebenso eine Kombination bzw. ein Gemisch aus mehreren der zuvor beschriebenen Oxyimidsalze.

Im Oxyimidsalz gemäß der nachfolgenden Formel 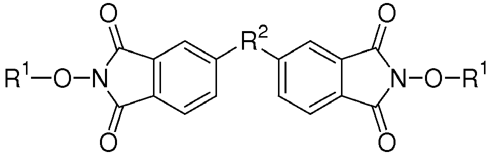 ist es bevorzugt, wenn der Rest R² ausgewählt ist aus Resten der Gruppe bestehend aus
-(CH₂)ₙ- mit n = 1 bis 18, -CH(CH₃)-, -C(CH₃)₂-, -CH(CF₃)-, -C(CF3)2-, -O-,-S-, -SO₂-, -NHCO-, -CO-, -O-C(O)-O- sowie den nachfolgend abgebildeten Gruppen 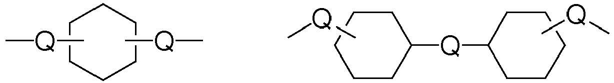 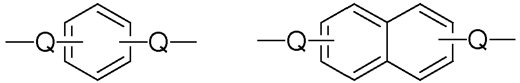 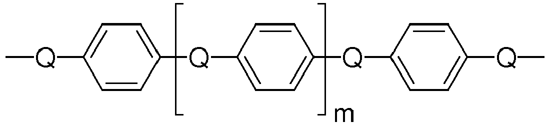 wobei
die in den zuvor abgebildeten Gruppen enthaltenen cycloaliphatischen oder aromatischen Ringsysteme unsubstituiert oder durch eine oder mehrere Alkyl- und/oder Alkoxygruppen substituiert sind,
- Q: bei jedem Auftreten gleich oder verschieden ist und ausgewählt ist aus der Gruppe bestehend aus einer chemischen Bindung sowie den Resten -(CH₂)ₙ- mit n = 1 bis 18, -CH(CH₃)-, -C(CH₃)₂-, -CH(CF₃)-, -C(CF₃)₂-, -O-, -S-, -SO₂-, -NHCO-, -CO-, -CO₃-, und
- m: 0 oder 1 bis 3 ist.

Vorzugsweise sind die zu schützenden Kunststoffe thermoplastische Polymere und insbesondere ausgewählt aus der Gruppe bestehend aus:
a) Polymeren aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (lonomere), sowie Terpolymere wie z.B. Ethylen-Acrylsäure-Glycidylacrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graftMaleinsäureanhydrid
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, Styrol-Isopren-Styrol (SIS), Styrol-butadien-acrylnitril (ABS), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltenden Polymeren wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymeren von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat, Polyacrylnitril, Polyacrylamide, Copolymere wie z.B. Polyacrylnitril-Polyalkylacrylat, Polymethacrylimid
e) Polymeren aus ungesättigten Alkoholen und Derivaten, wie z.B. Polyvinylalkohol, Polyvinylacetat, Polyvinylbutyral,
f) Polyacetalen, wie z.B. Polyoxymethylen (POM) oder Copolymere mit z.B. Butanal,
g) Polyphenylenoxiden und Blends mit Polystyrol oder Polyamiden,
h) Polymeren von cyclischen Ethern wie z.B. Polyethylenglycol, Polypropylenglycol, Polyethylenoxid, Polypropylenoxid, Polytetrahydrofuran,
i)Polyurethanen, aus hydroxyterminierten Polyethern oder Polyestern und aromatischen oder aliphatischen Isocyanaten insbesondere lineare Polyurethane, Polyharnstoffe,
j)Polyamiden wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3- Diaminobenzol, Blends von unterschiedlichen Polyamiden wie z.B. PA-6 und PA 6.6 bzw. Blends von Polyamiden und Polyolefinen wie z.B. PA/PP,
k) Polyimiden, Polyamid-imiden, Polyetherimiden, Polyesterimiden, Poly(ether)ketonen, Polysulfonen, Polyethersulfonen, Polyarylsulfonen, Polyphenylensulfiden, Polybenzimidazolen, Polyhydantoinen,
l)Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure (PLA), Polyhydroxybutyrat (PHB), Polyhydroxyvalerat (PHV)
m) Polycarbonaten, Polyestercarbonaten, sowie Blends wie z.B. PC/ABS, PC/PBT, PC/PET/PBT, PC/PA
n) Cellulosederivaten wie z.B. Cellulosenitrat, Celluloseacetat, Cellulosepropionat, Cellulosebutyrat,
o) Nicht thermoplastischen, elastomeren oder duroplastischen Kunststoffen,
p) sowie Mischungen, Kombinationen oder Blends aus zwei oder mehr der zuvor genannten Polymere.

Sofern es sich bei den unter a) bis o) angegebenen Polymeren um Copolymere handelt, können diese in Form von statistischen ("random"), Block- oder "tapered" Strukturen vorliegen.

Sofern es sich bei den unter a) bis o) angegebenen Polymeren um stereoreguläre Polymere handelt, können diese in Form von isotaktischen, stereotaktischen, aber auch ataktischen Formen oder in Stereoblockstrukturen vorliegen.

Weiterhin können die unter a) bis o) angegebenen Polymere sowohl amorphe als auch (teil-)kristalline Morphologien aufweisen.

Ggf. können die unter a) bis o) genannten Polymere auch vernetzt vorliegen, z.B. vernetztes Polyethylen, das dann als X-PE bezeichnet wird.

Die genannten Polymeren a) bis o) können dabei nicht nur als Neuware sondern auch in Form von Rezyklaten vorliegen, z.B. als Produktionsabfälle oder aus Wertstoffsammlungen ("post-consumer" Rezyklate).

Bevorzugte duromere oder elastomere, nicht-thermoplastische Kunststoffe, die weiter voranstehend unter o) gelistet sind und in denen die vorliegenden Flammschutzmittel Verwendung finden können sind dabei die folgenden:
q) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
r) Phenolharzen wie z.B. Phenol-Formaldehyd-Harze, Harnstoff-Formaldehyd-Harze, Melamin-Formaldehydharze,
s) ungesättigten Polyesterharzen aus ungesättigten Dicarbonsäuren und Diolen,
t) Silikonen,
u) Polyurethanen als Reaktionsprodukte aus di- oder polyfunktionellen Isocyanaten und Polyolen, Polyharnstoffen,
v) Alkydharzen, Allylharzen.

Ganz besonders bevorzugt werden die erfindungsgemäßen Flammschutzmittel bei Polyolefinen, vorzugsweise Polypropylen und/oder Polyethylen und deren Copolymeren und Blends eingesetzt.

Weiter bevorzugt werden die organischen Oxyimidsalze in Kombination mit mindestens einem weiteren Flammschutzmittel verwendet. Dieses mindestens eine weitere Flammschutzmittel ist dabei bevorzugt ausgewählt bestehend aus
a) anorganischen Flammschutzmitteln wie z.B. Al(OH)₃, Mg(OH)₂, AIO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) stickstoffhaltigen Flammschutzmitteln wie z.B. Melamin, Melem, Melam, Melon, Melaminderivate, Melaminkondensationsprodukte oder Melaminsalze, Benzoguanamin, Polyisocyanurate, Allantoin, (Poly)Phosphacene, insbesondere Melamincyanurat, Melaminphosphat, Dimelaminphosphat, Melaminpyrophosphat, Melaminpolyphosphat, Melamin-methanphosphonat, Melamin-Metall-Phosphate wie z.B. Melaminaluminiumphosphat, Melaminzinkphosphat, Melaminmagnesiumphosphat, sowie die entsprechenden Pyrophosphate und Polyphosphate, Ethylendiaminmethanphosphonat , Poly-[2,4-(piperazin-1,4-yl)-6-(morpholin-4-yl)-1,3,5-triazin], Ammoniumpolyphosphat, Melaminborat, Melaminhydrobromid,
c) Radikalbildnern, wie z.B. Alkoxyamine, Hydroxylaminester, Azoverbindungen, Dicumyl oder Polycumyl, Hydroxyimide oder deren Derivate wie z.B. Hydroxyimidester oder Hydroxyimidether.
d) Phosphorhaltigen Flammschutzmitteln wie z.B. anorganische oder organische Phosphonate wie z.B. Aluminiumphosphonat, Phosphonatester, oligomere und polymere Derivate der Methanphosphonsäure, roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphat, 9,10-Dihydro-9-oxa-10-phosphorylphenanthren-10-oxid (DOPO) und deren substituierte Verbindungen,
e) Halogenhaltigen Flammschutzmitteln auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis(tribromphenoxy)ethan, Hexa-bromcyclododecan, bromiertes Diphenylethan, Tris-(2,3-dibrompropyl)isocyanurat, Ethylen-bis(tetrabromophthalimid), Tetrabromobisphenol-A-bis(2,3)dibrompropylether),Tetrabromo-bisphenol A, bromiertes Polystyrol, bromiertes Polybutadien bzw, Polystyrol-bromiertes Polybutadien-Copolymere, bromiertes Epoxidharz, Polypentabrombenzylacrylat, bromierte Polyphenylenether, ggf. in Kombination mit Sb₂O₃ und/oder Sb₂O₅,
f) Boraten wie z.B. Zinkborat oder Calciumborat, ggf auf Trägermaterialien wie Silica
g) Schwefelhaltige Verbindungen wie z.B. elementarer Schwefel, Disulfide und Polysulfide, Thiuramsulfid, Dithiocarbamate, Mercaptobenzthiazol und Sulfenamide,
h) Antidrip-Mitteln wie z.B. Polytetrafluorethylen,
i)siliciumhaltigen Verbindungen wie z.B. Polyphenylsiloxane
j)Kohlenstoffmodifikationen wie z.B Kohlenstoff-Nanoröhren (CNT) oder Graphen
sowie Kombinationen oder Mischungen hieraus.

Bei den unter e) genannten halogenhaltigen Flammschutzmitteln handelt es sich häufig um kommerzielle Produkte, die z.B. von den Firmen Albemarle, Chemtura/Great Lakes oder ICL-IP im Handel erhältlich sind.

Insbesondere bei Kombinationen der erfindungsgemäß verwendeten Verbindungen gemäß Formeln I bis IV mit mindestens einem Radikalbildner als weiteres Flammschutzmittel ergeben sich synergistische Effekte.

Radikalbildner im Sinne der vorliegenden Erfindung sind Verbindungen, die durch thermische und Licht-induzierte Spaltung Radikale erzeugen können. Geeignete Radikalbildner für die hier vorliegenden Anwendungen sind solche, die für die Kunststoff- oder Beschichtungs-Verarbeitungsprozesse eine ausreichende thermische Stabilität aufweisen, d.h. bei der Verarbeitung noch keine oder nur sehr geringe Mengen an Radikalen bilden und erst bei höheren Temperaturen, wie sie erst im Brandfall auftreten, spontan Radikale erzeugen. Die jeweiligen Verarbeitungsprozesse und Temperaturen für Beschichtungen und Kunststoff-Verarbeitungsprozesse sind dem Fachmann bekannt. Kunststoff-Verarbeitungsprozesse und dazugehörige Temperaturen können aber auch der Fachliteratur entnommen werden wie z.B. H. Domininghaus, P. Elsner, P. Eyerer. T. Hirth, Kunststoffe , 8. Auflage, Springer 2012.

Der Radikalbildner ist dabei bevorzugt ausgewählt aus der Gruppe bestehend aus N-Alkoxyaminen, -C-C- Radikalbildnern, Radikalbildnern mit Azogruppen (-N=N-), Radikalbildnern mit Hydrazingruppen (-NH-HN-), Radikalbildnern mit Hydrazongruppen (>C=N-NH-), Radikalbildnern mit Azingruppen (>C=N-N=C<), Radikalbildnern mit Triazengruppen (-N=N-N<).

Die Herstellung geeigneter Azoverbindungen ist beispielsweise in M. Aubert et. al. Macromol. Sci. Eng. 2007, 292, 707-714 oder in WO 2008101845, die Herstellung von Hydrazonen und Azinen in M. Aubert et al., Pol. Adv. Technol. 2011, 22, 1529-1538, die Herstellung von Triazenen in W. Pawelec et al., Pol. Degr. Stab. 2012, 97, 948-954 beschrieben.

Der Radikalbildner ist dabei besonders bevorzugt ausgewählt aus der Gruppe bestehend aus
a) N-Alkoxyaminen gemäß der nachfolgend abgebildeten Strukturformel 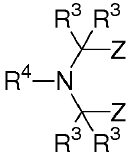 wobei
   R³ für Wasserstoff oder einen gegebenenfalls substituierter Alkyl-, Cycloalkyl-, Aryl-, Heteroaryl- oder Acyl-Rest steht, insbesondere ein C1 bis C4- Alkylrest ist,
   R⁴ für einen Alkoxy-, Aryloxy-, Cycloalkoxy-, Aralkoxy- oder Acyloxy-Rest steht,
   Z für Wasserstoff oder einen gegebenenfalls substituierter Alkyl-, Cycloalkyl-, Aryl-, Heteroaryl- oder Acyl-Rest steht, wobei die beiden Reste Z auch einen geschlossenen Ring bilden können, der ggf. durch Ester-, Ether-, Amin, Amid, Carboxy- oder Urethangruppen substituiert sein kann,
b) Azo-Verbindungen gemäß der nachfolgend abgebildeten Strukturformeln

   R⁵-N=N-R⁵

   oder 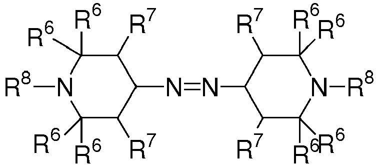 wobei
   R⁵ einen Alkly-, Cycloalkyl- oder Arylrest bedeutet,
   R⁶ bei jedem Auftreten gleich oder verschieden ist und einen linearen oder verzweigten Alkylrest bedeutet,
   R⁷ bei jedem Auftreten gleich oder verschieden ist und Wasserstoff oder einen linearen oder verzweigten Alkylrest bedeutet, und
   R⁸ bei jedem Auftreten gleich oder verschieden ist und einen Alkyl, Alkoxy-, Aryloxy- Cycloalkyloxy-, Aralkoxy oder Acyloxyrest bedeutet,
c) Dicumyl gemäß der nachfolgend abgebildeten Strukturformel 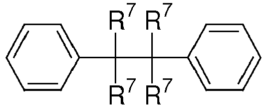 wobei R⁷ die zuvor angegebene Bedeutung aufweist, bevorzugt Methyl ist,
d) und/oder Polycumyl gemäß der nachfolgend abgebildeten Strukturformel 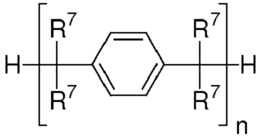 wobei R⁷ die zuvor angegebene Bedeutung aufweist, bevorzugt Methyl ist, und 2 < n < 100.

### Typische Beispiele für die zuvor genannten N-Alkoxyamine der angegebenen Struktur sind dabei:

1-Cyclohexyloxy-2,2,6,6-Tetramethyl-4-Octadecylaminopiperidin; Bis(1-Octyloxy-2,2,6,6-Tetramethylpiperidin-4-yl) Sebacat; 2,4-Bis[(1-Cyclohexyloxy-2,2,6,6-Tetramethylpiperidin-4-yl)Butylamino]-6-(2-Hydroxyethylamino-S-Triazin; Bis(1-Cyclohexyloxy-2,2,6,6-Tetramethylpiperidin-4-yl) Adipat; 2,4-Bis[(1-Cyclohexyloxy-2,2,6,6-Tetramethylpiperidin-4-yl)Butylamino]-6-Chloro-S-Triazin; 1-(2-Hydroxy-2-Methylpropoxy)-4-Hydroxy-2,2,6,6-Tetramethylpiperidin; 1-(2-Hydroxy-2-Methylpropoxy)-4-Oxo-2,2,6,6-Tetramethylpiperidin; 1-(2-Hydroxy-2-Methylpropoxy)-4-Octadecanoyloxy-2,2,6,6-Tetramethylpiperidin; Bis(1-(2-Hydroxy-2-Methylpropoxy)-2,2,6,6-Tetramethylpiperidin-4-yl) Sebacat; Bis(1-(2-Hydroxy-2-Methylpropoxy)-2,2,6,6-Tetramethylpiperidin-4-yl) Adipat; 2,4-Bis{N-[1-(2-Hydroxy-2-Methylpropoxy)-2,2,6,6-Tetramethylpiperidin-4-yl]-N-Butylamino}-6-(2-Hydroxyethylamino)-S-Triazin); 4-Piperidinol, 2,2,6,6-tetramethyl-1-(undecyloxy)-4,4'-carbonat; das Reaktionsprodukt von 2,4-Bis[(1-Cyclohexyloxy-2,2,6,6-Tetramethylpiperidin-4-yl)Butylamino]-6-Chloro-S-Triazin mit N,N'-Bis(3-Aminopropylethylendiamin); die Oligomer-Verbindung, welche das Kondensationsprodukt ist von 4,4'-Hexamethylen-Bis(Amino-2,2,6,6-Tetramethylpiperidin) und 2,4-Dichloro-6-[(1-Cyclohexyloxy-2,2,6,6-Tetramethyl-4-yl)Butylamino]-S-Triazin, an den Enden verschlossen mit 2-Chloro-4,6-Bis(Dibutylamino)-S-Triazin; aliphatische Hydroxylamin wie z.B. Disterarylhydroxylamin; sowie Verbindungen der Formel 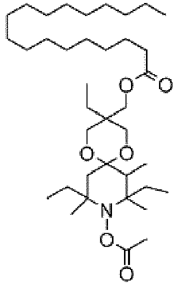 or
oder 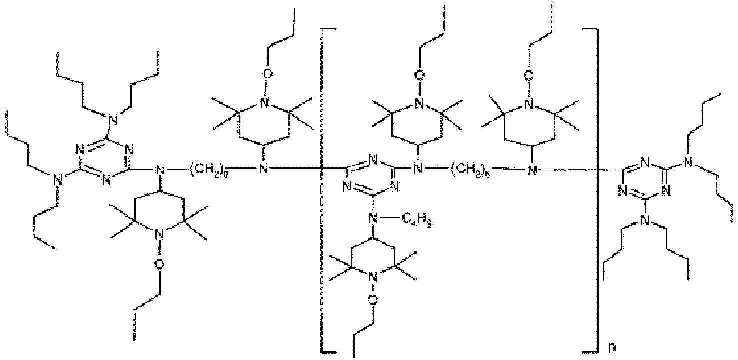 in denen n = 1-15 ist.

Die oben genannten Verbindungen sind teilweise kommerzielle Produkte und werden unter den folgenden Handelsnamen gehandelt: FLAMESTAB NOR 116 (RTM), TINUVIN NOR 371 (RTM), IRGATEC CR 76 (RTM) von BASF SE, Hostavin NOW (RTM) von Clariant oder ADK Stab LA 81 (RTM) von Adeka. Dicumyl und Polycumyl sind Handelsprodukte, die z.B. von United Initiators erhältlich sind.

Schwefelhaltige Flammschutzmittel sind ebenfalls Radikalbildner mit Disulfid- bzw. Polysulfidgrupen (-S-S-) oder Thiolgruppen (-S-H), sowie Thiuramsulfide wie z.B. Tetramethylthiuramdisulfid, Dithiocarbamate, wie z.B. Zinkdiethyldithiocarbamat oder Natriumdimethyldithiocarbamat, Mercaptobenzthiazole wie z.B. 2-Mercaptobenzthiazol und Sulfenamide wie z.B. N,N-Dicyclohexyl-2-benzothiazolsulfenamid.

Beispiel für ein Polysulfid ist elementarer Schwefel, andere Polysulfide sind beispielsweise in US 4218332 beschrieben.

Disulfide, Polysulfide, Thiole, Thiuramsulfide, Dithiocarbamate, Mercaptobenzthiazole und Sulfenamide sind im Handel erhältlich.

Weitere geeigneter Radikalbildner sind Hydroxyimide und deren Derivate wie Hydroxyimidester oder Hydroxyimidether, wie sie in WO 2014/154636 beschrieben werden.

Die Kombination der erfindungsgemäßen Oxyimid-Salze mit einem anderen Radikalbildner kann insbes. vorteilhaft sein, da hier die Radikalbildung bei unterschiedlichen Zersetzungstemperaturen erfolgen kann bzw. nach Bedarf eingestellt werden kann.

Das mindestens eine weitere Flammschutzmittel kann insbesondere auch ein phosphorhaltiges Flammschutzmittel sein. Bevorzugte phosphorhaltige Flammschutzmittel sind dabei Phosphinate der folgenden Strukturen: 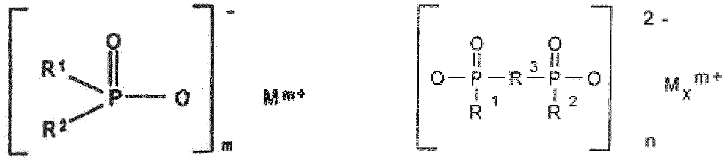 wobei bevorzugt R1 und R2 identisch oder verschieden sind und ausgewählt sind aus linearem oder verzweigtem C1-C6-Alkyl und/oder Aryl; M ausgewählt ist aus der Gruppe bestehend aus Mg, Ca, Al, Sb, Sn, Ge, Ti, Fe, Zr, Ce, Bi, Sr, Mn, Li, Na, K, Zn und/oder einem protonierten Stickstoff-Base, vorzugsweise Calcium-Ionen, Magnesium-Ionen, Aluminium-Ionen, und/oder Zink-Ionen; und m = 1-4, bevorzugt 2 oder 3, ist; n = 1-4, bevorzugt 1 oder 3, ist; x = 1-4, bevorzugt 1 oder 2, ist. In einer besonders bevorzugten Ausführungsform ist R₁ = Alkyl, R₂ = Alkyl und M = Al oder Zn.

Ein besonders bevorzugtes Beispiel für ein erfindungsgemäßes Phosphinat sind die kommerziell erhältlichen Produkte Exolit OP (RTM) von Clariant SE.

Weitere bevorzugte phosphorhaltige Flammschutzmittel sind Metallsalze der hypophosphorigen Säure mit einer Struktur gemäß der Formel 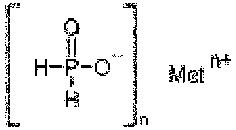 wobei Met ein Metall ist, ausgewählt aus den Gruppen I, II, III und IV des Periodensystems der Elemente, und n eine Zahl von 1 bis 4 ist, die der Ladung des entsprechenden Metall-Ions Met entspricht. Metⁿ⁺ ist beispielsweise Na⁺, Ca²⁺, Mg²⁺, Zn²⁺, Ti⁴⁺ oder Al³⁺, wobei Ca²⁺, Zn²⁺ und Al³⁺ besonders bevorzugt sind.

Die oben genannten Salze der hypophosphorigen Säure sind teilweise kommerziell erhältlich z.B. unter der Bezeichnung Phoslite (RTM) von Italmatch Chemicals.

Eine weitere bevorzugte Gruppe von phosphorhaltigen Flammschutzmitteln sind Phosphonate oder Phosphonsäurediarylester einer Struktur gemäß der folgenden Formel: 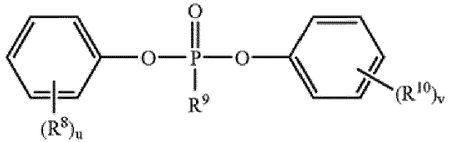 wobei R₈ und R₁₀= H, Alkyl, vorzugsweise C1-C4-Alkyl sind, R₉= C1-C4-Alkyl, u = 1-5 ist und v = 1-5 ist.

Entsprechende Strukturen können auch in der Form von Phosphonat-Oligomeren, Polymeren und Co-Polymeren vorliegen. Linear oder verzweigte Phosphonat-Oligomere und Polymere sind aus dem Stand der Technik bekannt. Für verzweigte Phosphonat-Oligomere und Polymere wird auf die US-Patente US 2 716 101, US 3 326 852, US 4 328 174, US 4 331 614, US 4 374 971, US 4 415 719, US 5 216 113, US 5 334 692, US 3 442 854, US 6 291 630 B1 US 6 861 499 B2 und US 7816486 B2 verwiesen. Für Phosphonat-Oligomere wird auf die US-Patentanmeldungen US 2005/0020800 A1, US 2007/0219295 A1 und US 2008/0045673 A1 verwiesen. In Bezug auf lineare Phosphonat-Oligomere und Polymere wird auf die US-Patent-Dokumente US 3 946 093, US 3 919 363, US 6 288 210 B1, US 2 682 522 und US 2 891 915 verwiesen.

Polymere und oligomere Phosphonate sind beispielsweise unter dem Handelsnamen Nofia (RTM) von FRX Polymers erhältlich.

Eine weitere bevorzugte Gruppe von phosphorhaltigen Flammschutzmitteln sind Verbindungen auf Basis von Oxaphosphorinoxid und deren Derivate mit beispielsweise den folgenden Strukturen: 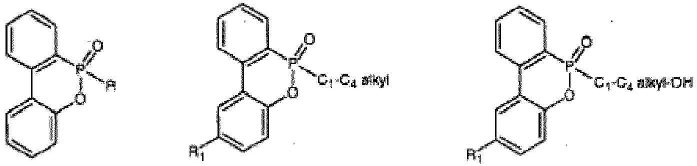 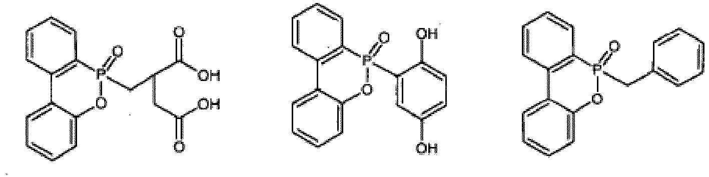 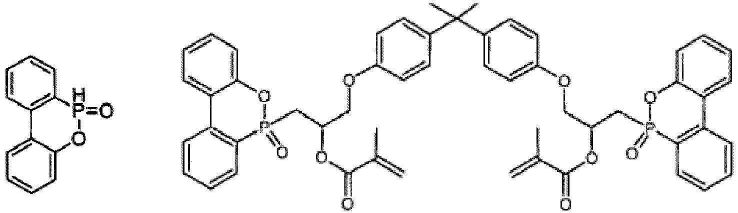 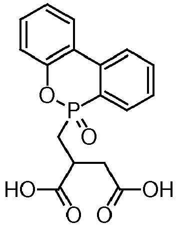 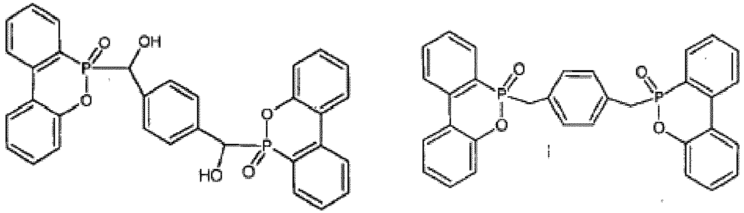 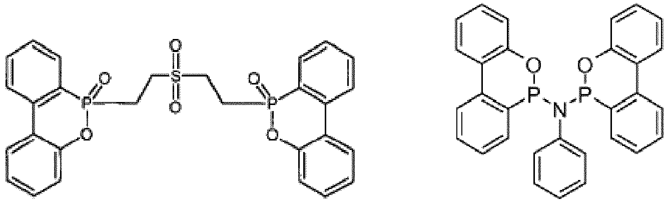 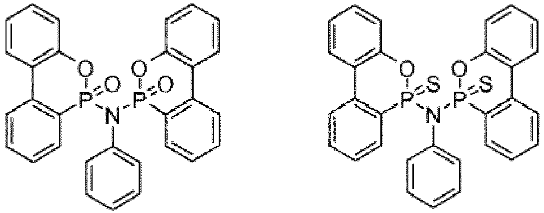 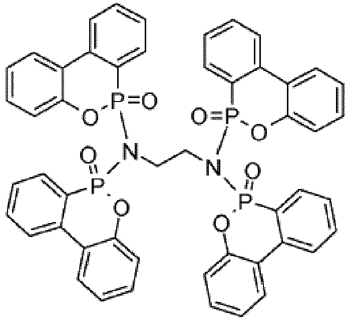 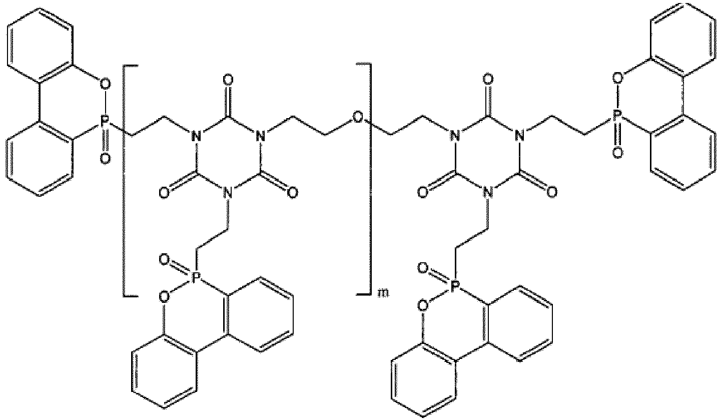 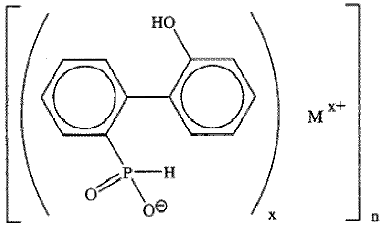 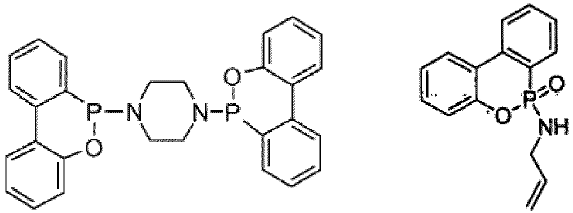 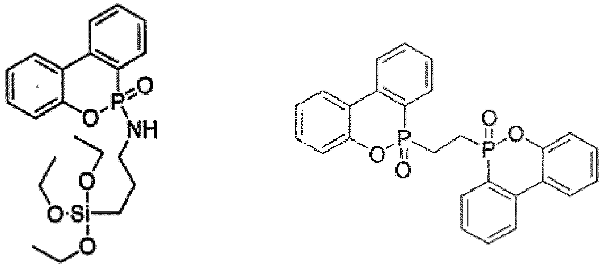 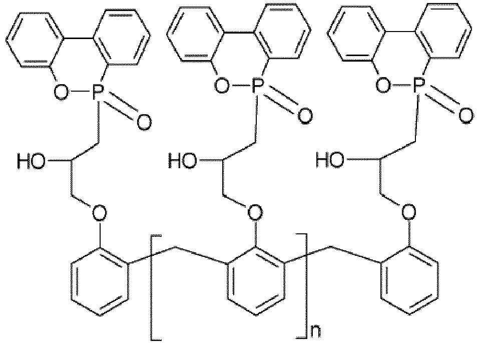 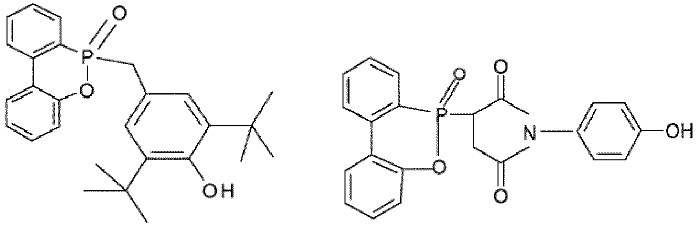 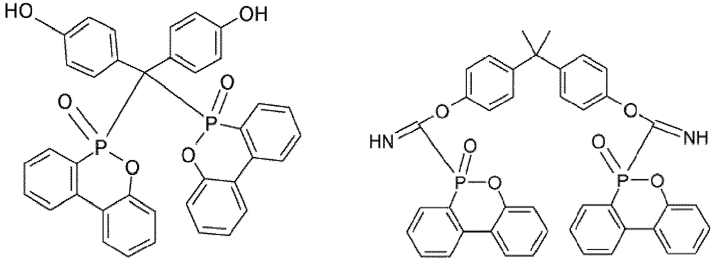 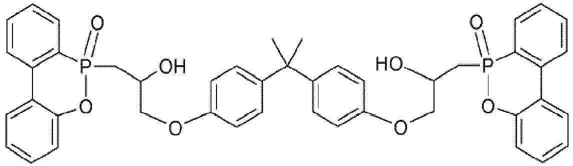 wobei M ein Metall ist, ausgewählt aus der zweiten, dritten, zwölften oder dreizehnten Gruppe des Periodensystems der Elemente ist, x = 2 oder 3 ist, n ≥ 10 ist, m= 0-25ist, R = H, Halogen oder ein aliphatischer oder aromatischer Rest mit 1-32 C-Atomen ist und R₁ = H, C1-C6-Alkyl ist.

Produkte auf der Basis von Oxophosphorinoxid sind beispielsweise unter dem Handelsnamen Ukanol (RTM) von Schill und Seilacher GmbH im Handel. Weitere Verbindungen können beispielsweise gemäß der Patentschriften WO 2013020696, WO 2010135398, WO03070736, WO2006084488, WO 2006084489, WO2011000019, WO2013068437, WO2013072295 hergestellt werden.

Weitere synergistische phosphorhaltige Flammschutzmittel sind zyklische Phosphonate einer Struktur gemäß einer der folgenden Formeln: 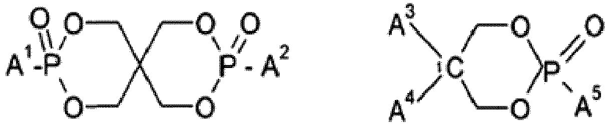 wobei A¹ und A² unabhängig voneinander eine substituierte oder nicht substituierte, geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen und wobei A³ und A⁴ unabhängig voneinander Methyl oder Ethyl sind und A⁵ eine geradkettige oder verzweigte Alkylgruppe mit 1 bis 4 Kohlenstoffatomen oder eine Phenyl- oder Benzylgruppe ist, die jeweils bis zu 3 Methylgruppen aufweisen kann, ist.

Zyklische Phosphonate sind beispielsweise von der Fa. Thor GmbH unter dem Handelsnamen Aflammit (RTM) im Handel oder können gemäß EP 2450401 hergestellt werden.

Weitere synergistische phosphorhaltige Flammschutzmittel sind Phosphacene, insbes. polymere Phosphacene. Ein entsprechendes Produkt ist z.B. unter der Bezeichnung SPB-100 von Otsuka Chemicals im Handel.

Das mindestens eine weitere Flammschutzmittel kann insbesondere auch ein Stickstoffhaltiges Flammschutzmittel sein. Bevorzugte Stickstoffhaltige Flammschutzmittel sind Melaminpolyphosphat, Melamincyanurat, Melamin-Metall-Phosphate, Poly-[2,4-(piperazin-1,4-yl)-6-(morpholin-4-yl)-1,3,5-triazin] und Ammoniumpolyphosphat. Diese Verbindungen sind kommerzielle Produkte und unter den Handelsnamen Melapur (RTM) von BASF SE, Budit (RTM) von Budenheim Chemische Fabrik, Exolit AP (RTM) von Clariant, Safire (RTM) von J.M. Huber Corporation oder MCA PPM Triazine von MCA Technologies GmbH erhältlich.

Ganz besonders bevorzugt ist die Kombination der erfindungsgemäßen Oxyimidsalze mit einem Phosphonat und/oder einem (Poly)phosphacen.

Bei der zuvor beschriebenen kombinatorischen Verwendung des organischen Oxyimidsalzes mit mindestens einem weiteren Flammschutzmittel ist es bevorzugt, wenn das Gewichtsverhältnis von organischem Oxyimidsalz bzw. der Summe sämtlicher verwendeter organische Oxyimidsalze und dem mindestens einen weiteren Flammschutzmittel im Bereich von 99:1 bis 1:99, bevorzugt von 5 : 95 bis 50 : 50, besonders bevorzugt von 10 : 90 bis 30 : 70 erliegt.

Ebenso ist es möglich und bevorzugt, dass die zuvor erwähnten organischen Oxyimidsalze in Kombination mit mindestens einer phosphorhaltigen Verbindung verwendet werden. Die phosphorhaltige Verbindung ist dabei nicht identisch mit den zuvor erwähnten phosphorhaltigen Flammschutzmitteln, Diese phosphorhaltigen Verbindungen können dabei insbesondere ausgewählt sein aus der Gruppe bestehend aus organischen Phosphiten oder Phosphoniten. Geeignete Verbindungen sind dann beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert*-butylphenyl)-pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert*-butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)-methylphosphit, Bis(2,4-di-*tert*-butyl-6-methylphenyl)ethylphosphit, 6-Fluoro-2,4,8,10-tetra-*tert*-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl))phosphit,5-Butyl-5-ethyl-2-(2,4,6-tri-*tert*-butylphenoxy)-1,3,2-dioxaphosphiran.

Weiter vorteilhaft ist, dass die organischen Oxyimidsalze, bezogen auf die Kunststoffe, zu 0,01 bis 30 Gew.-%, bevorzugt zu 0,1 bis 20 Gew.-%, besonders bevorzugt zu 1 bis 10 Gew.-% eingesetzt werden.

Die Erfindung betrifft zudem eine flammgeschützte Kunststoffzusammensetzung, enthaltend oder bestehend aus:
a) 60 bis 99,9 Gew.-Teilen, bevorzugt 60 bis 98, besonders bevorzugt 70 bis 95 Gew.-Teilen mindestens eines Kunststoffes, insbesondere mindestens eines thermoplastischen Polymers,
b) 0,1 bis 40 Gew.-Teilen, bevorzugt 1 bis 25 Gew.-Teilen, besonders bevorzugt 2,5 bis 15 Gew.-Teilen mindestens eines organischen Oxyimidsalzes, enthaltend mindestens ein Strukturelement der nachfolgend abgebildeten Formel I 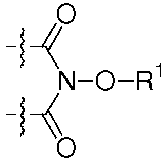 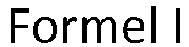 wobei R¹ ausgewählt ist aus der Gruppe bestehend aus anorganischen oder organischen Kationen
c) 0 bis 25 Gew.-Teilen, bevorzugt 1 bis 20 Gew.-Teilen, besonders bevorzugt 2,5 bis 15 Gew.-Teilen mindestens eines weiteren Flammschutzmittels sowie
d) 0 bis 25 Gew.-Teilen, bevorzugt 1 bis 20 Gew.-Teilen, besonders bevorzugt 2,5 bis 15 Gew.-Teilen mindestens einer weiteren phosphorhaltigen Verbindung.

Die in der Zusammensetzung eingesetzten Oxyimidsalze und/oder Flammschutzmittel entsprechen den voranstehend beschriebenen Oxyimidsalzen bzw. Flammschutzmitteln. Insbesondere ist es bevorzugt, wenn das Flammschutzmittel ein Phosphonat oder ein (Poly)phosphacen ist.

Eine bevorzugte Ausführungsform sieht vor, dass die Kunststoffzusammensetzung zusätzlich
a) bis 40 Gew.-Teile mindestens eines Verstärkungs- oder Füllstoffes und/oder
b) bis 5 Gew.-Teile mindestens eines Additivs aus der Klasse der phenolischen Antioxidantien, Phosphite, Säurefänger, gehinderten Amine, Dispergiermittel sowie Kombinationen hiervon enthält.

Vorzugsweise enthält die flammengeschützte Kunststoffzusammensetzung zusätzlich Zusatzstoffe ausgewählt aus der Gruppe bestehend aus UV-Absorber, der Lichtstabilisatoren, der Stabilisatoren, der Hydroxylamine, der Benzofuranone, der Nukleierungsmittel, Schlagzähigkeitsverbesserer, Weichmacher, Gleitmittel, Rheologiemodifikatoren, Verarbeitungshilfsmittel, Pigmente, Farbstoffe, optische Aufheller, antimikrobielle Wirkstoffe, Antistatika, Slipmittel, Antiblockmittel, Kopplungsmittel, Kettenverlängerer, Dispergiermittel, Kompatibilisatoren, Sauerstofffänger, Säurefänger, Markierungsmittel oder Antifoggingmittel eingesetzt werden. In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat, Calciumstearoyl-2-lactylat oder von Hydrotalciten und/oder Stabilisatoren aus der Gruppe der phenolischen Antioxidantien und der Phosphite und/oder Lichtstabilisatoren aus der Gruppe der gehinderten Amine (HALS) und/oder Dispergiermittel.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-*tert*-butyl-2'-hydroxyphenyl)benzotriazol, 2-(5'-*tert*-Butyl-2'-hydroxy-phenyl)benzotriazol, 2-(2'-Hydroxy-5'-(1,1,3,3-tetramethylbutyl)phenyl)benzotriazol, 2-(3',5'-Di-*tert-*butyl-2'-hydroxyphenyl)-5-chlorobenzotriazol, 2-(3'-*tert*-Butyl-2'-hydroxy-5'-methylphenyl-5-chlorobenzotriazol, 2-(3'-*sec*-Butyl-5'-*tert*-butyl-2'-hydroxyphenyl)benzotriazol, 2-(2'-Hydroxy-4'-octyloxyphenyl)benzotriazol, 2-(3',5'-Di-*tert*-amyl-2'-hydroxyphenyl)benzotriazol, 2-(3',5'-Bis(α,α-dimethylbenzyl)-2'-hydroxyphenyl)benzotriazol, 2-(3'-*tert*-Butyl-2'-hydroxy-5'-(2-octyloxycarbonylethyl)phenyl)-5-chlorobenzotriazol, 2-(3'-*tert*-Butyl-5'-[2-(2-ethylhexyloxy)carbonylethyl]-2'-hydroxyphenyl)-5-chlorobenzotriazol, 2-(3'-*tert*-Butyl-2'-hydroxy-5'-(2-methoxycarbonylethyl)phenyl)-5-chlorobenzotriazol, 2-(3'-*tert*-Butyl-2'-hydroxy-5'-(2-methoxycarbonylethyl)phenyl)-benzotriazol, 2-(3'-*tert*-Butyl-2'-hydroxy-5'-(2-octyloxycarbonylethyl)phenyl)-benzotriazol, 2-(3'-*tert*-Butyl-5'-[2-(2-ethylhexyloxy)carbonylethyl]-2'-hydroxyphenyl)benzotriazol, 2-(3'-Dodecyl-2'-hydroxy-5'-methylphenyl)-benzotriazol, 2-(3'-*tert*-Butyl-2'-hydroxy-5'-(2-isooctyloxycarbonylethyl)-phenylbenzotriazol, 2,2'-Methylenbis[4-(1,1,3,3-tetramethylbutyl)-6-benzotriazol-2-ylphenol]; das Produkt der Umesterung von 2-[3'-*tert*-Butyl-5'-(2-methoxycarbonylethyl)-2'-hydroxyphenyl]-2H-benzotriazol mit Polyethylenglycol 300; [R-CH₂CH₂-COO-CH₂CH₂-]-₂, wobei R = 3'-*tert-*Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-hydroxy-3'-(1,1,3,3-tetramethylbutyl)-5'-(α,α-dimethylbenzyl)phenyl]benzotriazol Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-*tert*-Butylphenylsalicylat, Phenylsalicylat, Octylphenylsalicylat, Dibenzoylresorcinol, Bis(4-*tert-*butylbenzoyl)resorcinol, Benzoylresorcinol, 2,4-Di-*tert*-butylphenyl-3,5-di-*tert-*butyl-4-hydroxybenzoat, Hexadecyl-3,5-di-*tert*-butyl-4-hydroxybenzoat, Octadecyl-3,5-di-*tert*-butyl-4-hydroxybenzoat, 2-Methyl-4,6-di-*tert*-butylphenyl-3,5-di-*tert*-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-*tert*-butoxanilid, 2,2'-didodecyloxy-5,5'-di-*tert*-butoxanilid, 2-Ethoxy-2'-ethyloxanilid, N,N'-Bis(3-dimethylaminopropyl)oxamid, 2-Ethoxy-5-*tert*-butyl-2'-ethoxanilid und seine Mischungen mit 2-Ethoxy-2'-ethyl-5,4'-di-*tert*-butoxanilid, Mischungen von o- und p-Methoxydisubstituierten Oxaniliden und Mischungen von o- und p-Ethoxydisubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl-1,3,5-triazin.

Geeignete Metalldesaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)-oxylyldihydrazid, N,N'-Bis(salicyloyl)thiopropionyldihydrazid.

Insbesondere als Metalldesaktivatoren geeignet sind die folgenden Strukturen:

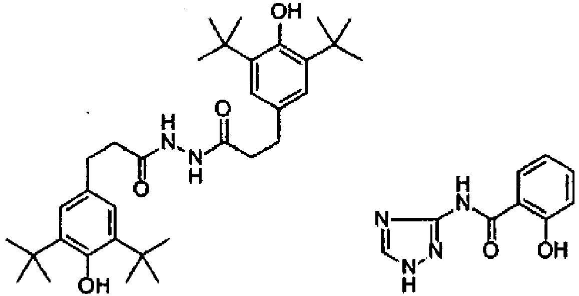

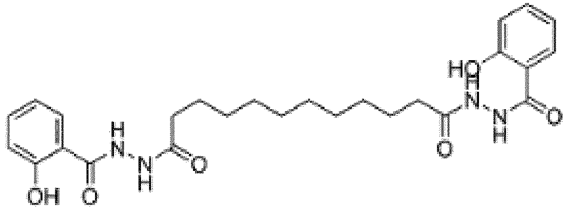

### Geeignete phenolische Antioxidantien sind beispielsweise:

Alkylierte Monophenole, wie z.B. 2,6-Di-*tert*-butyl-4-methylphenol, 2-*tert-*Butyl-4,6-dimethylphenol, 2,6-Di-*tert*-butyl-4-ethylphenol, 2,6-Di-tert-butyl-4-n-butylphenol, 2,6-Di-*tert*-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-*tert*-butyl-4-methoxymethylphenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-*tert*-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-*tert*-butyl-4-methyoxyphenol, 2,5-Di-*tert*-butylhydrochinon, 2,5-Di-*tert*-amylhydrochinon, 2,6-Diphenyl-4-octadecyloxyphenol, 2,6-Di-*tert*-butylhydrochinon, 2,5-Di-*tert-*butyl-4-hydroxyanisol, 3,5-Di-*tert*-butyl-4-hydroxyanisol, 3,5-Di-*tert*-butyl-4-hydroxyphenylstearat, Bis(3,5-di-*tert*-butyl-4-hydroxylphenyl)adipat;
Tocopherole, wie z.B. α-, β-, γ-, δ-Tocopherol und Mischungen aus diesen (Vitamin E);
Hydroxylierte Thiodiphenylether, wie z.B. 2,2'-Thiobis(6-*tert*-butyl-4-methylphenol), 2,2'-Thiobis(4-octylphenol), 4,4'-Thiobis(6-*tert*-butyl-3-methylphenol), 4,4'-Thiobis(6-*tert*-butyl-2-methylphenol), 4,4'-Thiobis(3,6-di-*sec-*amylphenol), 4,4'-Bis(2,6-dimethyl-4-hydroxyphenyl)disulfid;
Alkylidenbisphenole, wie z.B. 2,2'Methylenbis(6-*tert*-butyl-4-methylphenol), 2,2'-Methylenbis(6-*tert*-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-*tert-*butylphenol), 2,2'-Ethylidenbis(4,6-di-*tert*-butylphenol), 2,2'-Ethylidenbis(6-*tert*-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-*tert*-butylphenol, 4,4'-Methylenbis(6-*tert*-butyl-2-methylphenol), 1,1-bis(5-*tert*-butyl-4-hydroxy-2-methylphenyl)butan, 2,6-Bis(3-*tert*-butyl-5-methyl-2-hydroxybenzyl)-4-methylphenol, 1,1,3-Tris(5-*tert-*butyl-4-hydroxy-2-methylphenyl)butan, 1,1-bis(5-*tert*-butyl-4-hydroxy-2-methylphenyl)-3-n-dodecylmercaptobutan, Ethylenglycol-bis[3,3-bis(3'-*tert-*butyl-4'-hydroxyphenyl)butyrat], Bis(3-*tert*-butyl-4-hydroxy-5-methylphenyl)-dicyclopentadien, Bis[2-(3'-*tert*-butyl-2'-hydroxy-5'-methylbenzyl)-6-*tert-*butyl-4-methylphenyl]terephthalat, 1,1-Bis-(3,5-dimethyl-2-hydroxyphenyl)-butan, 2,2-Bis(3,5-di-*tert*-butyl-4-hydroxyphenyl)propan, 2,2-Bis-(5-*tert*-butyl-4-hydroxy-2-methylphenyl)-4-n-dodecylmercaptobutan, 1,1,5,5-Tetra(5-*tert-*butyl-4-hydroxy-2-methylphenyl)pentan;
O-, N- und S-Benzyl-Verbindungen, wie z.B. 3,5,3',5'-Tetra-*tert*-butyl-4,4'-dihydroxydibenzylether, Octadecyl-4-hydroxy-3,5-dimethylbenzylmercaptoacetat, Tridecyl-4-hydroxy-3,5-di-*tert*-butylbenzylmercaptoacetat, Tris(3,5-di-*tert*-butyl-4-hydroxybenzyl)amin,, Bis(4-*tert*-butyl-3-hydroxy-2,6-dimethylbenzyl)dithioterephthalat, Bis(3,5-di-*tert*-butyl-4-hydroxybenzyl)-sulfid, Isooctyl-3,5-di-*tert*-butyl-4-hydroxybenzylmercaptoacetat;
Hydroxybenzylierte Malonate, wie z.B. Dioctadecyl-2,2-bis(3,5-di-*tert*-butyl-2-hydroxybenzyl)malonat, Dioctadecyl-2-(3-*tert*-butyl-4-hydroxy-5-methylbenzyl)malonat, Didodecylmercaptoethyl-2,2-bis(3,5-di-*tert*-butyl-4-hydroxybenzyl)malonat, Bis[4-(1,1,3,3-tetramethylbutyl)phenyl]-2,2-bis(3,5-di-*tert-*butyl-4-hydroxybenzyl)malonat;
Aromatische Hydroxybenzylverbindungen, wie z.B. 1,3,5-Tris(3,5-di-*tert*-butyl-4-hydroxybenzyl)-2,4,6-trimethylbenzol, 1,4-Bis(3,5-di-*tert*-butyl-4-hydroxybenzyl)-2,3,5,6-tetramethylbenzol, 2,4,6-Tris(3,5-di-*tert*-butyl-4-hydroxybenzyl)phenol;
Triazinverbindungen, wie z.B. 2,4-Bis(octylmercapto)-6-(3,5-di-*tert*-butyl-4-hydroxyanilino)-1,3,5-triazin, 2-Octylmercapto-4,6-bis(3,5-di-*tert*-butyl-4-hydroxyanilino)-1,3,5-triazin, 2-Octylmercapto-4,6-bis(3,5-di-*tert*-butyl-4-hydroxyphenoxy)-1,3,5-triazin, 2,4,6-Tris(3,5-di-*tert*-butyl-4-hydroxyphenoxy)-1,2,3-triazin, 1,3,5-Tris(3,5-di-*tert*-butyl-4-hydroxybenzyl)isocyanurat, 1,3,5-Tris(4-*tert*-butyl-3-hydroxy-2,6-dimethylbenzyl)isocyanurat, 2,4,6-Tris(3,5-di-*tert*-butyl-4-hydroxphenylethyl)-1,3,5-triazin, 1,3,5-Tris(3,5-di-*tert*-butyl-4-hydroyphenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-*tert*-butyl-4-hydroxybenzylphosphonat, Dietyhl-3,5-di-*tert*-butyl-4-hydroxybenzylphosphonat, Dioctadecyl-3,5-di-*tert*-butyl-4-hydroxybenzylphosphonat, Dioctadecyl-5-*tert-*butyl-4-hydroxy-3-methylbenzylphosphonat, das Calciumsalz des Monoethylesters der 3,5-Di-*tert*-butyl-4-hydroxybenzylphosphonsäure;
Acylaminophenole, wie z.B. 4-Hydroxylauranilid, 4-Hydroxystearanilid, Octyl-N-(3,5-di-*tert*-butyl-4-hydroxyphenyl)carbamat;
Ester der β-(3,5-Di-*tert*-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Ester der β-(5-*tert*-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-*tert*-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der 3,5-Di-*tert*-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-*tert*-butyl-4-hydroxyphenyl)propionsäure, wie z.B. N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hydrazid, N,N'-Bis[2-(3-[3,5-di-*tert*-butyl-4-hydroxyphenyl]propionyloxy)ethyl]oxamid (Naugard®XL-1, vertrieben durch Uniroyal);
Ascorbinsäure (Vitamin C).

### Besonders bevorzugte phenolische Antioxidantien sind:

Octadecyl-3-(3,5-di-*tert*-butyl-4-hydroxyphenyl)propionat, Pentaerythritoltetrakis[3-(3,5-di-*tert*-butyl-4-hydroxyphenyl)propionat, Tris(3,5-di-*tert*-butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid.

### Geeignete Phosphite/Phosphonite sind beispielsweise:

Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert*-butylphenyl)-pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert*-butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)-methylphosphit, Bis(2,4-di-*tert*-butyl-6-methylphenyl)ethylphosphit, 6-Fluoro-2,4,8,10-tetra-*tert*-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butylphenoxy)-1,3,2-dioxaphosphiran.

### Besonders bevorzugte Phosphite/Phosphonite sind:

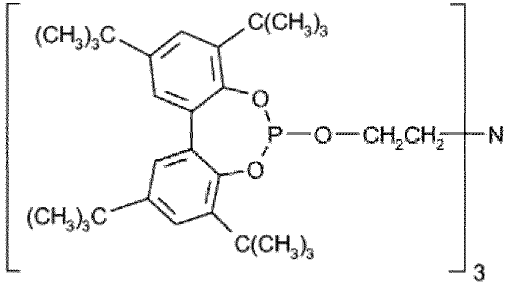

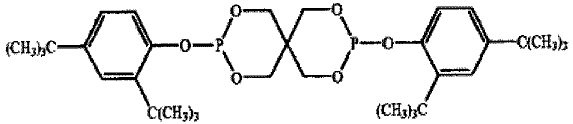

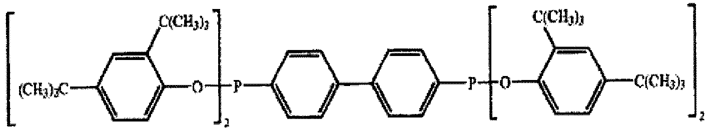

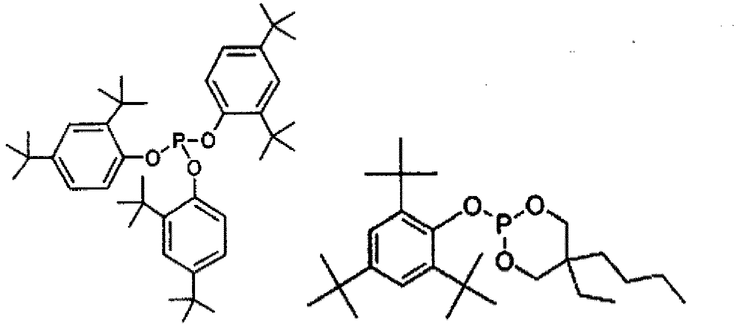

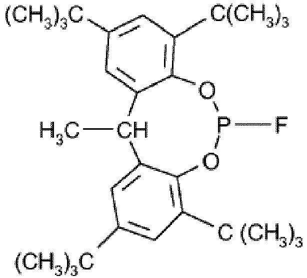

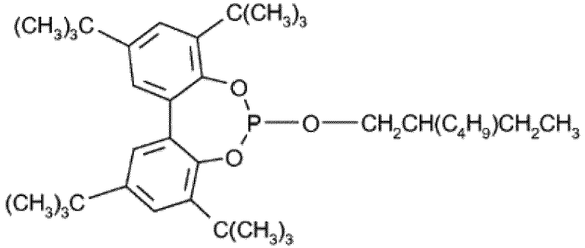

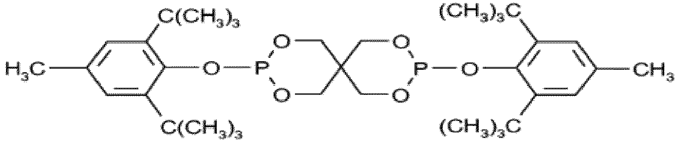

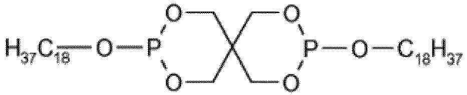

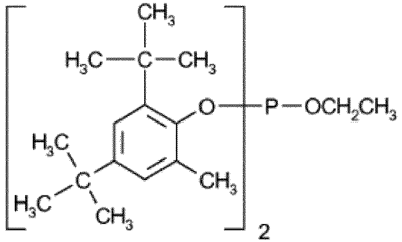

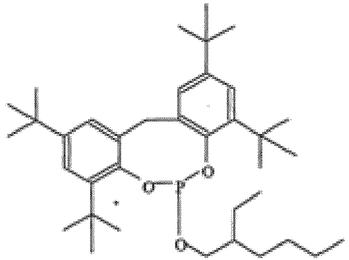

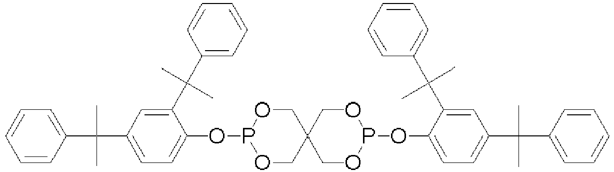

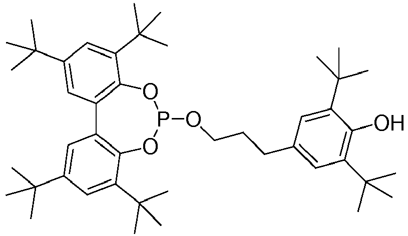

### Weitere geeignete Stabilisatoren sind aminische Antioxidantien. Geeignete aminische Antioxidantien sind beispielsweise:

N,N'-Di-isopropyl-p-phenylendiamin, N,N'-Di-*sec*-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-*sec*-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)amino]ethan, 1,2-Bis(phenylamino)-propan, (o-Tolyl)biguanid, Bis[4-(1',3'-dimethylbutyl)phenyl]amin, *tert-*octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearylhydroxylamin, N-Benzyl-α-phenylnitron, N-Octadecyl-α-hexadecylnitron, sowie Genox EP (Addivant) gemäß der Formel:

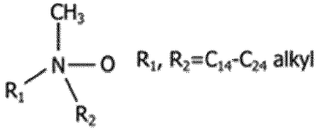

Weitere geeignete Stabilisatoren sind Thiosynergisten. Geeignete Thiosynergisten sind beispielsweise Distearylthiodipropionat, Dilauryldipropionat oder die Verbindung gemäß der folgenden Formel:

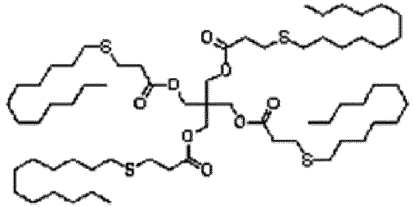

Weitere geeignete Stabilisatoren insbesondere für Polyamide sind Kupfersalze wie z.B. Kupfer-(I)-iodid, Kupfer-(I)-bromid oder Kupferkomplexe wie z.B. Triphenylphosphin-Kupfer-(I)-Komplexe.

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

### Geeignete Dispergiermittel sind beispielsweise:

Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z.B. Benzoesäure, Bernsteinsäure, Adipinsäure, z.B. Natriumbenzoat, Zinkglycerolat, Aluminium-hydroxy-bis(4-*tert*-butyl)benzoat, Benzylidensorbitole wie z.B. 1,3:2,4-Bis(Benzyliden)sorbitol oder 1,3:2,4-Bis(4-Methylbenzyliden)sorbitol, 2,2'-Methylen-bis-(4,6-di-*tert*-butylphenyl)phosphat, sowie Trisamide wie z.B. gemäß der folgenden Strukturen

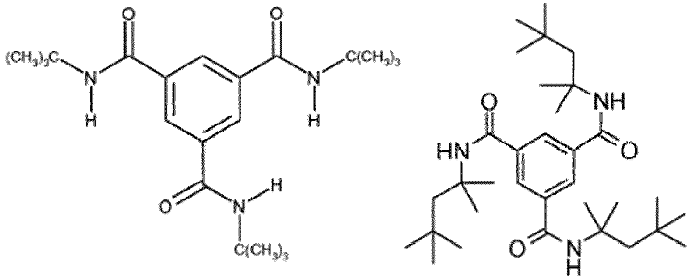

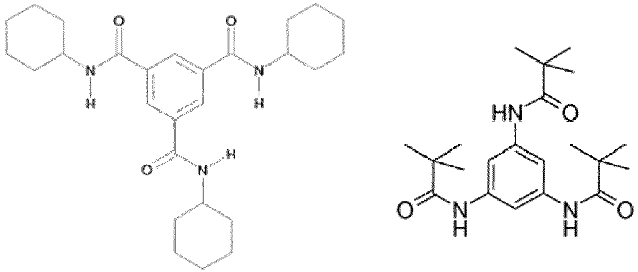

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose,synthetische Fasern oder Metallfasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z.B. Polystyrol-Polyacrylat-Polyglycidyl(meth)acrylat-Copolymere, Polystyrol-Maleinsäureanhydrid-Copolymere und Polyethylen-Maleinsäureanhydrid-Copolymere.

Geeignete Pigmente können anorganischer oder organischer Natur sein. Geeignete anorganische Pigmente sind beispielsweise Titandioxid, Zinkoxid, Zinksulfid, Eisenoxid, Ultramarin, Ruß. Geeignete organische Pigmente sind beispielsweise Anthrachinone, Anthanthrone, Benzimidazolone, Chinacridone, Diketopyrrolopyrrole, Dioxazine, Indanthrone, Isoindolinone, Azo-Verbindungen, Perylene, Phthalocyanine oder Pyranthrone. Weitere geeignete Pigmente sind Effektpigmente auf Metallbasis oder Perlglanzpigmente auf Metalloxid-Basis.

Optische Aufheller sind beispielsweise Bisbenzoxazole, Phenylcumarine oder Bis(styryl)biphenyle und insbesondere optische Aufheller der Formeln:

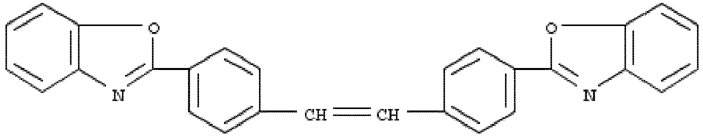

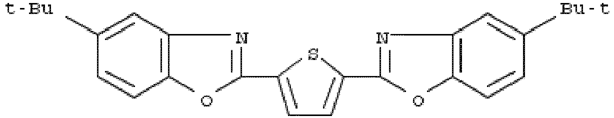

Geeignete Füllstoffdesaktivatoren sind beispielsweise glycidylbasierte Epoxide wie z.B. Bis-phenol-A-diglycidylether oder Bisphenol-F-diglycidylether und deren oligomere oder polymere Harze Polysiloxane, Polyacrylate insbesondere Blockcopolymere wie Polymethacrylsäure-polyalkylenoxid oder Polystyrol-Polyacrylat-Polyglycidyl(meth)acrylat-Copolymere.

Geeignete Antistatika sind beispielsweise ethoxylierte Alkylamine, Fettsäureester, Alkylsulfonate und Polymere wie z.B. Polyetheramide oder Copolymere, die Salze der Acrylsäure beinhalten, wie z.B. Polyethylen-Polyacrylat-Polyacrylat-Na-Copolymere.

Weiterhin betrifft die vorliegende Erfindung ein Verfahren zur Herstellung einer flammgeschützten Kunststoffzusammensetzung, bei dem
a) 0,1 bis 40 Gew.-Teile, bevorzugt 1 bis 25 Gew.-Teile, besonders bevorzugt 2,5 bis 15 Gew.-Teile mindestens eines organischen Oxyimidsalzes, enthaltend mindestens ein Strukturelement der nachfolgend abgebildeten Formel I 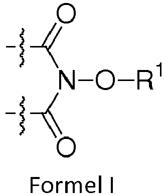 wobei R¹ ausgewählt ist aus der Gruppe bestehend aus anorganischen oder organischen Kationen
b) vor, nach oder gleichzeitig mit 0 bis 25 Gew.-Teilen, bevorzugt 2,5 bis 15 Gew.-Teilen mindestens eines weiteren Flammschutzmittels und/oder
c) vor, nach oder gleichzeitig mit 0 bis 25 Gew.-Teilen, bevorzugt 1 bis 20 Gew.-Teilen, besonders bevorzugt 2,5 bis 15 Gew.-Teilen mindestens einer phosphorhaltigen Verbindung
in 60 bis 99,9 Gew.-Teile, bevorzugt 60 bis 98 Gew.-Teile, besonders bevorzugt 70 bis 95 Gew.-Teile mindestens eines Kunststoffes, insbesondere mindestens eines thermoplastischen Polymers eingebracht wird.

Weiterhin betrifft die vorliegende Erfindung ein Formteil, Lack oder Beschichtung, herstellbar aus einer Herstellung einer zuvor beschriebenen erfindungsgemäßen flammgeschützten Kunststoffzusammensetzung, insbesondere in Form von Spritzgussteilen, Folien, Beschichtungen, Schäumen, Fasern, Kabeln und Rohren, die über Extrusion, Spritzguss, Blasformen, Pressverfahren hergestellt werden z.B. für Haushalts- und Elektrogeräte, Fahrzeugteile, Konsumartikel, Möbel, Textilien.

Die zuvor vorgestellten erfindungsgemäßen organischen Oxyimidsalze eignen sich als Flammschutzmittel für thermoplastische, elastomere und duromere Kunststoffe insbesondere in Form von Spritzgussteilen, Folien oder Filmen, Beschichtungen oder Lacken, Schäumen, Fasern, Kabeln und Rohren, Profilen, Hohlkörper, Bändchen, Membranen, wie z.B. Geomembranen, oder Klebstoffen, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie (Auto, Flugzeug, Schiff, Bahn), für medizinische Anwendungen, für Haushalts- und Elektrogeräte, Fahrzeugteile, Konsumartikel, Verpackungen, Möbel, Textilien. Ein weiterer Einsatzbereich sind Lacke, Farben und Beschichtungen (Coatings).

Beispielsweise können die erfindungsgemäßen Zusammensetzungen für Marineanwendungen (Pontoons, Planken, Boote), Autoanwendungen (Stoßfänger, Batterien, Verkleidungsteile, Benzintanks, Kabel, Leitungen etc.), Flugzeugteile, Eisenbahnteile, Fahrrad- und Motorradteile, Raumfahrtanwendungen wie z.B. Satellitenteile, Gehäuseteile für Elektrogeräte wie Computer, Telefone, Drucker, Audio- und Videosysteme, Stecker, gedruckte Schaltungen, Schalter, Lampenabdeckungen, Kühlschränke, Kaffeemaschinen, Staubsauger, Rotorblätter für die Energiegewinnung, Ventilatoren, Folien für Dachkonstruktionen, Baufolien, Rohre, wie z.B. Abwasserrohre und Gasrohre, Verbindungsstücke, Drainagesysteme, Profile wie z.B. Fensterprofile oder Kabelkanäle, Wood Composites, Möbel, Fußboden, Verkleidungsplatten, künstlicher Rasen, Stadionsitze, Teppiche, Netze, Seile, Möbelteile, Matten, Gartenstühle, Flaschenkästen, Behälter und Fässer verwendet werden.

Die Einarbeitung der oben beschriebenen Flammschutzmittel und der zusätzlichen Additive in den Kunststoff erfolgt durch übliche Verarbeitungsmethoden, wobei das Polymere aufgeschmolzen und mit den Flammschutzmitteln und Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen erfolgen. Verschiedene Flammschutzmittel und Additive können dabei separat oder als Mischung zugegeben werden, in Form von Flüssigkeiten, Pulvern, Granulaten oder kompaktierten Produkten oder ebenfalls in Form von Masterbatchen oder Konzentraten, die beispielsweise 50-80 % der erfindungsgemäßen Zusammensetzungen enthalten.

Die vorliegende Erfindung wird anhand der nachfolgenden Beispiele näher beschrieben, ohne die vorliegende Erfindung auf die speziell dargestellten Parameter zu beschränken.

### Synthesebeispiele:

Beispiel 1: Synthese von Natrium *N*-oxyphthalimid
   Analog zur Literatur (Monatshefte für Chemie 137, 1591-1595 (2006)) werden zu einer Lösung aus *N*-Hydroxyphthalimid (61,7 g; 378 mmol) in absolutiertem Ethanol (800 mL) unter Rühren eine äquivalente Menge an Natriumhydroxid (15,1 g; 378 mmol) hinzugefügt und anschließend für zwei Stunden unter Rückfluss gekocht. Nach Abkühlung der Lösung wird das gebildete Produkt filtriert und mit absolutiertem Ethanol gewaschen. Das Produkt wird quantitativ als roter Feststoff nach Trocknung im Vakuumofen bei 100°C für 12 Stunden erhalten.
   ¹H-NMR (500 MHz, D2O): δ=7.49 (dd, J = 5.3, 3.0 Hz, 1H), 7.35 (dd, J = 5.3, 3.0 Hz, 1H) ppm.
   ¹³C-NMR (126 MHz, D2O): δ=169.11, 133.29, 129.08, 121.44 ppm.
Beispiel 2: Synthese eines N-oxyphthalimid Zink Salzes
   Zu einer Lösung aus Natrium N-oxyphthalimid (5,97 g; 32,2 mmol) in H₂O (400 mL) wird unter Rühren Zinknitrat-hexahydrat (4,8 g; 16,1 mmol) hinzugefügt. Nach ca. einer halben Stunde bildet sich ein orangefarbener Niederschlag, worauf die Dispersion für weitere 12 Stunden bei Zimmertemperatur gelagert wird. Das Produkt wird anschließend über einen Büchnertrichter abfiltriert, mit H₂O (100 mL) gewaschen und bei 140°C für 12 Stunden im Vakuum getrocknet.
   ¹H NMR (300 MHz, DMSO-*d₆*): δ = 7.74 - 7.40 (m, 1H).
Beispiel 3: Synthese eines N-oxyphthalimid Melaminium Salzes
   Zu einer Lösung aus Melamin (10 g; 79,3 mmol) in heißem H2O (200 mL) wird unter Rühren N-Hydroxyphthalimid (12,93 g; 79,3 mmol) hinzugefügt und das Gemisch darauf für 3 Stunden unter Rückfluss erhitzt. Anschließend wird das Gemisch für weitere 12 Stunden bei Zimmertemperatur gelagert. Das orangefarbene Produkt wird darauf über einen Büchnertrichter abfiltriert, mit H2O (100 mL) gewaschen und bei 140°C für 12 Stunden im Vakuum getrocknet.
   ¹H NMR (300 MHz, DMSO-*d₆*): δ = 7.82 (s, 1H), 6.23 (s, 1H).
Beispiel 4: Synthese eines N-oxyphthalimid Polyvinyldiaminotriazin Salzes
   Zu einer Dispersion aus Poly-2-vinyl-4,6-diamino-1,3,5-triazin (5 g; 36,5 mmol) in heißem H₂O (50 mL) wird unter Rühren N-Hydroxyphthalimid (5,95 g; 36,5 mmol) hinzugefügt und die Dispersion für 3 Stunden unter Rückfluss erhitzt. Anschließend wird das Gemisch für weitere 12 Stunden bei Zimmertemperatur gelagert. Das gelbliche und unlösliche Produkt wird darauf über einen Büchnertrichter abfiltriert und abschließend bei 140°C für 12 Stunden im Vakuum getrocknet.

### Herstellung und Prüfung einer flammgeschützten erfindungsgemäßen Kunststoff-Mischung

Die Extrusionen der Polypropylen-Proben (DOW C766-03) erfolgen bei einer Temperatur von 190°C und einer Schneckendrehzahl von 150 U/min auf einem 11 mm Doppelschneckenextruder (Process 11 von Thermo Scientific). Das gewünschte Verhältnis aus Polymer und Additiven wird zunächst durch Mischen homogenisiert und über eine volumetrische Dosierung der Extrusion zugeführt.

Probekörper für die Brandprüfung werden aus dem Granulat bei einer Temperatur von 220°C und einem Druck von 2 t unter Verwendung einer hydraulischen 10t-Presse (Werner & Pfleiderer) hergestellt. Dazu wird das Granulat in die Pressform eingefüllt und diese in die bereits vorgeheizte Presse überführt. Bei einem Druck von 0,5 t wird das Granulat zunächst 60 s lang aufgeschmolzen. Nach Ablauf der Schmelzzeit wird der Druck auf 2 t erhöht und für weitere 3 min konstant gehalten. Unter Beibehaltung des Anpressdruckes wird die Form auf 60 °C abgekühlt und danach die Probekörper entnommen. Die Probenkörper haben gemäß Norm die folgenden Dimensionen: 127,5 x 12,5 x 1,5 mm.

Die in der Tabelle 1 enthaltenen erfindungsgemäßen Beispiele und Vergleichsbeispiele wurden nach DIN EN 60695-11-10 geprüft und die Brennzeiten und Klassifizierung gemäß Norm erhalten:

**Tabelle 1: Zusammensetzungen in Polypropylen und Ergebnisse der Brandprüfung**

| Beispiel | Zusammensetzung Flammschutzmittel | Brennzeiten Summe der Nachbrennzeiten von 5 Prüfkörper bei 2 Beflammungen [in Sekunden] | Klassifizierung nach DIN EN 60695-11-10 |
|---|---|---|---|
| Vergleichsbeispiel 1 (Stand der Technik) | 15 % Diethylaluminiumphosphinat | >200 | Nicht klassifiziert |
| Vergleichsbeispiel 2 | 20 % Diethylaluminiumphosphinat | 170 | Nicht klassifiziert |
| Erfindungsgemäßes Beispiel 3 | 15% Diethylaluminiumphosphinat 2% Natrium *N*-oxyphthalimid (Beispiel 1) | 30,9 | V-2 |
| Erfindungsgemäßes Beispiel 4 | 8% Phosphonat + 2% Natrium *N*-oxyphthalimid (Beispiel 1) | 54,4 | V-2 |
| Erfindungsgemäßes Beispiel 5 | 15% Diethylaluminiumphosphinat 2% Zink-Salz (Beispiel 2) | 27,2 | V-2 |
| Erfindungsgemäßes Beispiel 6 | 15% Diethylaluminiumphosphinat 2% Melaminium-Salz (Beispiel 3) | 27 | V-2 |
| Erfindungsgemäßes Beispiel 7 | 10% Phosphazen 5% Melaminium-Salz (Beispiel 3) | 4,2 | V-2 |
| Erfindungsgemäßes Beispiel 8 | 15% Diethylaluminiumphosphinat 2% Polyvinyldiaminotriazin-Salz (Beispiel 4) | 33,3 | V-2 |

| | | | |
|---|---|---|---|
| Phosphazen (SBP-100, Otsuka Chemical Co., Ltd.) Aluminiumdiethylphosphinat (Exolit OP 1230, Clariant SE) Phosphonat (Aflammit PCO 900, Thor GmbH) | | | |

Die erfindungsgemäßen Beispiele sind nach Entfernen der Zündquelle selbstverlöschend und weisen überraschenderweise verkürzte Brennzeiten gegenüber dem Vergleichsbeispiel auf, es wird eine Klassifizierung nach V-2 erhalten.

## Patentansprüche

1. Verwendung von organischen Oxyimidsalzen, enthaltend mindestens ein Strukturelement der nachfolgend abgebildeten Formel I 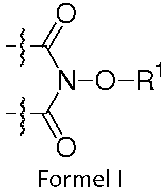
wobei R¹ ausgewählt ist aus der Gruppe bestehend aus anorganischen oder organischen Kationen,
als Flammschutzmittel für Kunststoffe.

2. Verwendung nach Anspruch 1, **dadurch gekennzeichnet, dass** die anorganischen Kationen ausgewählt sind aus der Gruppe bestehend aus Metallkationen, bevorzugt einwertige, zweiwertige oder dreiwertige Alkalimetallkationen, Erdalkalimetallkationen, Übergangsmetallkationen und/oder Seltenerdmetallkationen, insbesondere Na⁺, K⁺, Mg²⁺, Ca²⁺, Zn²⁺ und/oder Al³⁺,
die organischen Kationen ausgewählt sind aus der Gruppe bestehend aus Stickstoff und/oder Phosphor enthaltenden organischen Kationen, insbesondere Ammonium-, Melaminium- und/oder Phosphoniumkationen,
sowie Kombinationen mindestens zweier verschiedener der zuvor genannten Kationen und/oder Anionen.

3. Verwendung nach einem der vorhergehenden Ansprüche, **dadurch gekennzeichnet, dass** das organische Oxyimidsalz halogen-frei ist.

4. Verwendung nach einem der vorhergehenden Ansprüche, **dadurch gekennzeichnet, dass** das organische Oxyimidsalz die nachfolgende Struktur aufweist 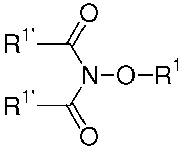 wobei R¹ wie oben stehend definiert ist und R^{1'} bei jedem Auftreten gleich oder verschieden ist und einen linearen oder verzweigten Alkylrest, einen linearen oder verzweigten Alkylenrest, einen aromatischen Rest, einen heteroaromatischen Rest darstellt oder beide Reste R^{1'} zu einem Ring verbunden sind, wobei der Ring gesättigt oder ungesättigt, substituiert oder unsubstituiert sein kann und/oder mindestens einer oder beide Reste R^{1'} oder die zu einem Ring verbundenen Resten R^{1'} eine mindestens ein weiteres Strukturelement der oben abgebildeten Formel I umfassen.

5. Verwendung nach einem der vorhergehenden Ansprüche, **dadurch gekennzeichnet, dass** das organische Oxyimidsalz
a) ein Strukturelement der allgemeinen Formel I umfasst und eine Struktur gemäß einer der nachfolgenden Formeln aufweist 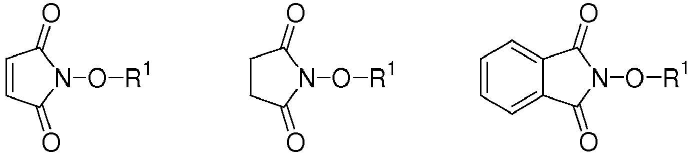 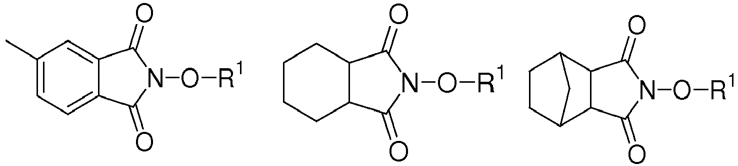 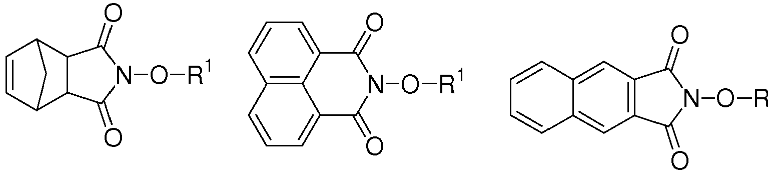 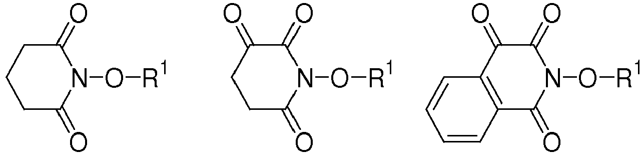 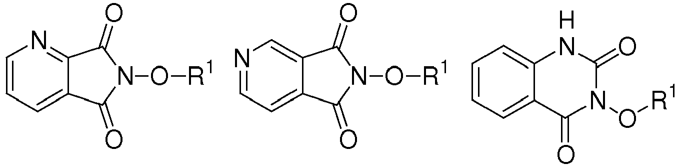 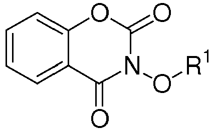
b) zwei Strukturelemente der allgemeinen Formel I umfasst und eine Struktur gemäß einer der nachfolgenden Formeln aufweist 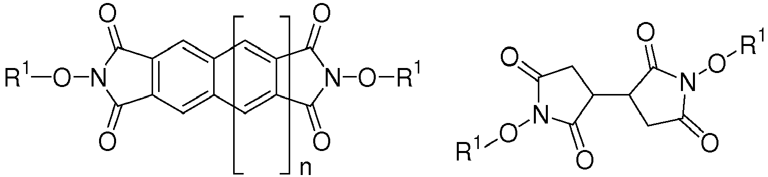 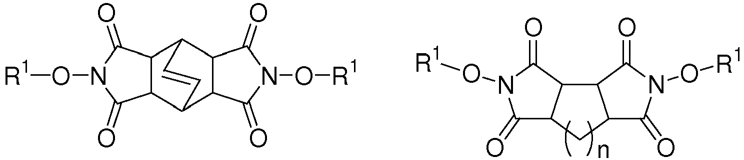 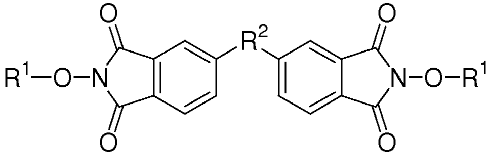 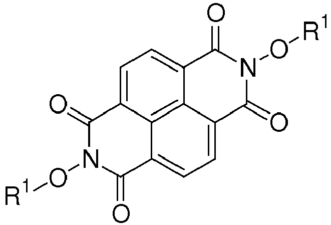 wobei
n 0, 1, 2, 3 oder 4 bedeutet, und
R² ausgewählt ist aus der Gruppe bestehend aus gegebenenfalls substituierten Alkylen-, Cycloalkylen-, Arylen-, Heteroarylen- oder verbrückenden Acyl-Resten,
oder
c) drei Strukturelemente der allgemeinen Formel I umfasst und eine Struktur gemäß der nachfolgenden Formel aufweist

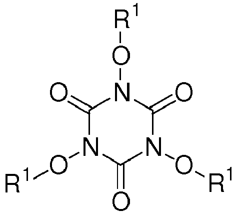

6. Verwendung nach vorhergehendem Anspruch, **dadurch gekennzeichnet, dass** R² ausgewählt ist aus Resten der Gruppe bestehend aus -(CH₂)ₙ- mit n = 1 bis 18, -CH(CH₃)-, -C(CH₃)₂-, -CH(CF₃)-, -O-, -S-, -SO₂-, -NHCO-, -CO-, -OC(O)O- sowie den nachfolgend abgebildeten Gruppen 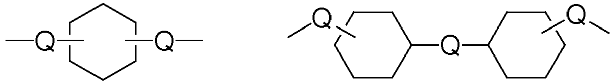 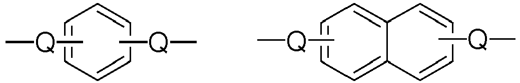 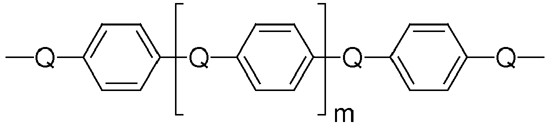 wobei
die in den zuvor abgebildeten Gruppen enthaltenen cycloaliphatischen oder aromatischen Ringsysteme unsubstituiert oder durch eine oder mehrere Alkyl- und/oder Alkoxygruppen substituiert sind,
Q bei jedem Auftreten gleich oder verschieden ist und ausgewählt ist aus der Gruppe bestehend aus einer chemischen Bindung sowie den Resten -(CH₂)ₙ- mit n = 1 bis 18, -CH(CH₃)-, -C(CH₃)₂-, -CH(CF₃)-, -C(CF₃)₂-, -O-, -S-, -SO₂-, -NHCO-, -CO-, ,-O-C(O)-O- und
m 0 oder 1 bis 3 ist.

7. Verwendung nach einem der vorhergehenden Ansprüche, **dadurch gekennzeichnet, dass** die Kunststoffe thermoplastische Polymere sind und insbesondere ausgewählt sind aus der Gruppe bestehend aus
a) Polymeren aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (lonomere), sowie Terpolymere sowie wie z.B. Ethylen-Acrylsäure-Glycidylacrylat, Pfropfpolymere wie z.B. Polypropylen-graftMaleinsäureanhydrid, Polypropylen-graftAcrylsäure, Polyethylen-graftAcrylsäure, Polyethylen-Polybutylacrylat-graft-Maleinsäureanhydrid,
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, StyrolIsopren-Styrol (SIS), Styrol-butadien-acrylnitril (ABS), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltenden Polymeren wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymeren von ungesättigten Estern wie z.B. Polyacrylate und Polymethacrylate wie Polymethylmethacrylat (PMMA), Polybutylacrylat, Polylaurylacrylat, Polystearylacrylat, Polyacrylnitril, Polyacrylamide sowie, Copolymere wie z.B. Polyacrylnitril-Polyalkylacrylat hiervon,
e) Polymeren aus ungesättigten Alkoholen und Derivaten, wie z.B. Polyvinylalkohol, Polyvinylacetat, Polyvinylbutyral,
f) Polyacetalen, wie z.B. Polyoxymethylen POM) oder Copolymere hiervon, mit z.B. Butanal,
g) Polyphenylenoxiden und Blends mit Polystyrol oder Polyamiden,
h) Polymeren von cyclischen Ethern wie z.B. Polyethylenglycol, Polypropylenglycol, Polyethylenoxid, Polypropylenoxid, Polytetrahydrofuran,
i) Polyurethanen, aus hydroxyterminierten Polyethern oder Polyestern und aromatischen oder aliphatischen Isocyanaten insbesondere lineare Polyurethane, sowie Polyharnstoffe,
j) Polyamiden wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol, Blends von unterschiedlichen Polyamiden wie z.B. PA-6 und PA 6.6 bzw. Blends von Polyamiden und Polyolefinen wie z.B. PA/PP,
k) Polyimiden, Polyamid-imiden, Polyetherimiden, Polyesterimiden, Poly(ether)ketone, Polysulfone, Polyethersulfonen, Polyarylsulfonen, Polyphenylensulfiden, Polybenzimidazolen, Polyhydantoinen,
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure,
m) Polycarbonaten, Polyestercarbonaten, sowie Blends wie z.B. PC/ABS, PC/PBT, PC/PET/PBT, PC/PA
n) Cellulosederivaten wie z.B. Cellulosenitrat, Celluloseacetat, Cellulosepropionat, Cellulosebutyrat,
o) elastomeren, nicht-thermoplastischen oder duroplastischen Kunststoffen
p) sowie Mischungen, Kombinationen oder Blends aus zwei oder mehr der zuvor genannten Polymere.

8. Verwendung nach einem der vorhergehenden Ansprüche, **dadurch gekennzeichnet, dass** die organischen Oxyimidsalze in Kombination mit mindestens einem weiteren Flammschutzmittel, ausgewählt aus der Gruppe bestehend aus
a) anorganischen Flammschutzmitteln wie z.B. Al(OH)₃, Mg(OH)₂, AlO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) stickstoffhaltigen Flammschutzmitteln wie z.B. Melamin, Melem, Melam, Melon, Melaminderivate, Melaminkondensationsprodukte oder Melaminsalze, Benzoguanamin, Polyisocyanurate, Allantoin, (Poly)Phosphacene, insbesondere Melamincyanurat, Melaminphosphat, Dimelaminphosphat, Melaminpyrophosphat, Melaminpolyphosphat, Melamin-methanphosphonat, Melamin-Metall-Phosphate wie z.B. Melaminaluminumphosphat, Melaminzinkphosphat, Melaminmagnesiumphopsphat, sowie die entsprechenden Pyrophosphate und Polyphosphate, Poly-[2,4-(piperazin-1,4-yl)-6-(morpholin-4-yl)-1,3,5-triazin], Ammoniumpolyphosphat, Melaminborat, Melaminhydrobromid, Ethylendiaminmethanphosphonat,
c) Radikalbildnern, wie z.B. Alkoxyamine, Hydroxylaminester, Azoverbindungen, Dicumyl oder Polycumyl, Hydroxyimide oder deren Derivate wie z.B. Hydroxyimidester oder Hydroxyimidether.
d) Phosphorhaltigen Flammschutzmitteln wie z.B. anorganische oder organische Phosphonate wie z.B. Aluminiumphosphonat, Phosphonatester, oligomere und polymere Derivate der Methanphosphonsäure, roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphat, 9,10-Dihydro-9-oxa-10-phosphorylphenanthren-10-oxid (DOPO) und deren substituierte Verbindungen,
e) Halogenhaltigen Flammschutzmitteln auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis(tribromphenoxy)ethan, Hexabromcyclododecan, bromiertes Diphenylethan, Tris-(2,3-dibrompropyl)isocyanurat, Tetrabrombisphenol-A-bis(2,3)dibrompropylether), Ethylen-bis(tetrabromo-phthalimid), Tetrabromo-bisphenol A, bromiertes Polystyrol, bromiertes Polybutadien bzw, Polystyrol-bromiertes Polybutadien-Copolymere, bromiertes Epoxidharz, Polypentabrombenzylacrylat, bromierte Polyphenylenether ggf. in Kombination mit Sb₂O₃ und/oder Sb₂O₅,
f) Boraten wie z.B. Zinkborat oder Calciumborat,
g) Schwefelhaltige Verbindungen wie z.B. wie z.B. elementarer Schwefel, Disulfide und Polysulfide, Thiuramsulfid, Dithiocarbamate, Mercaptobenzthiazol und Sulfenamide,
h) Antidrip-Mitteln wie z.B. Polytetrafluorethylen,
i) siliciumhaltigen Verbindungen wie z.B. Polyphenylsiloxane., sowie Kombinationen oder Mischungen hieraus verwendet werden.

9. Verwendung nach vorhergehendem Anspruch, **dadurch gekennzeichnet, dass** die Radikalbildner ausgewählt sind aus der Gruppe bestehend aus
a) N-Alkoxyaminen gemäß der nachfolgend abgebildeten Strukturformel 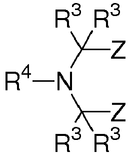 wobei
R³ für Wasserstoff oder einen gegebenenfalls substituierten Alkyl-, Cycloalkyl-, Aryl-, Heteroaryl- oder Acyl-Rest steht, insbesondere ein C1 bis C4- Alkylrest ist,
R⁴ für einen Alkoxy-, Aryloxy-, Cycloalkoxy-, Aralkoxy- oder Acyloxy-Rest steht,
Z für Wasserstoff oder einen gegebenenfalls substituierten Alkyl-, Cycloalkyl-, Aryl-, Heteroaryl- oder Acyl-Rest steht, wobei die beiden Reste Z auch einen geschlossenen Ring bilden können, der ggf. durch Ester-, Ether-, Amin, Amid, Carboxy- oder Urethangruppen substituiert sein kann,
b) Azo-Verbindungen gemäß der nachfolgend abgebildeten Strukturformeln
R⁵-N=N-R⁵
oder 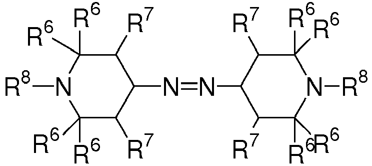 wobei
R⁵ einen Alkyl-, Cycloalkyl- oder Arylrest bedeutet,
R⁶ bei jedem Auftreten gleich oder verschieden ist und einen linearen oder verzweigten Alkylrest bedeutet,
R⁷ bei jedem Auftreten gleich oder verschieden ist und Wasserstoff oder einen linearen oder verzweigten Alkylrest bedeutet, und
R⁸ bei jedem Auftreten gleich oder verschieden ist und einen Alkyl-, Alkoxy-, Aryloxy- Cycloalkyloxy-, Aralkoxy oder Acyloxyrest bedeutet,
c) Dicumyl gemäß der nachfolgend abgebildeten Strukturformel 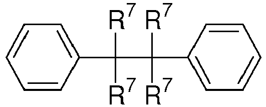 wobei R⁷ die zuvor angegebene Bedeutung aufweist, bevorzugt Methyl ist,
d) und/oder Polycumyl gemäß der nachfolgend abgebildeten Strukturformel 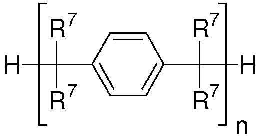 wobei R⁷ die zuvor angegebene Bedeutung aufweist, bevorzugt Methyl ist, und 2 < n < 100.

10. Verwendung nach einem der beiden vorhergehenden Ansprüche, **dadurch gekennzeichnet, dass** die organischen Oxyimidsalze und das mindestens eine weitere Flammschutzmittel in einem Gewichtsverhältnis von 99:1 bis 1:99, bevorzugt von 5 : 95 bis 50 : 50, besonders bevorzugt von 10 : 90 bis 30 : 70 verwendet werden und/oder
in Kombination mit mindestens einer phosphorhaltigen Verbindung, insbesondere einer phosphorhaltigen Verbindung ausgewählt aus der Gruppe bestehend aus Phosphiten oder Phosphoniten eingesetzt werden und/oder
bezogen auf die Kunststoffe, zu 0,01 bis 30 Gew.-%, bevorzugt zu 0,1 bis 20 Gew.-%, besonders bevorzugt zu 1 bis 10 Gew.-% eingesetzt werden.

11. Flammgeschützte Kunststoffzusammensetzung, enthaltend oder bestehend aus
a) 60 bis 99,9 Gew.-Teilen, bevorzugt 60 bis 98, besonders bevorzugt 70 bis 95 Gew.-Teilen mindestens eines Kunststoffes, insbesondere mindestens eines thermoplastischen Polymers,
b) 0,1 bis 40 Gew.-Teilen, bevorzugt 1 bis 25, besonders bevorzugt 2,5 bis 15 Gew.-Teilen mindestens eines organischen Oxyimidsalzes, enthaltend mindestens ein Strukturelement der nachfolgend abgebildeten Formel I 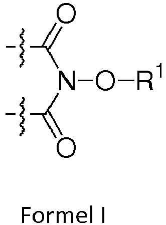 wobei R¹ ausgewählt ist aus der Gruppe bestehend aus anorganischen oder organischen Kationen.
c) 0 bis 25 Gew.-Teilen, bevorzugt 1 bis 20 Gew.-Teilen, besonders bevorzugt 2,5 bis 15 Gew.-Teilen mindestens eines weiteren Flammschutzmittels, wobei das Flammschutzmittel insbesondere ein Phosphonat oder ein (Poly)phosphacen oder Kombinationen hiervon ist, sowie
d) 0 bis 25 Gew.-Teilen, bevorzugt 1 bis 20 Gew.-Teilen, besonders bevorzugt 2,5 bis 15 Gew.-Teilen mindestens einer phosphorhaltigen Verbindung.

12. Flammgeschützte Kunststoffzusammensetzung nach vorhergehendem Anspruch, **dadurch gekennzeichnet, dass** zusätzlich
a) bis 40 Gew.-Teile mindestens eines Verstärkungs- oder Füllstoffes und/oder
b) bis 5 Gew.-Teile mindestens eines Additivs aus der Klasse der phenolischen Antioxidantien, Phosphite, Säurefänger, gehinderten Amine, Dispergiermittel sowie Kombinationen hiervon
enthalten sind.

13. Flammgeschützte Kunststoffzusammensetzung nach einem der beiden vorhergehenden Ansprüche, **dadurch gekennzeichnet, dass** Zusatzstoffe ausgewählt aus der Gruppe bestehend aus UV-Absorber, der Lichtstabilisatoren, der Stabilisatoren, der Hydroxylamine, der Benzofuranone, der Nukleierungsmittel, Schlagzähigkeitsverbesserer, Weichmacher, Gleitmittel, Rheologiemodifikatoren, Verarbeitungshilfsmittel, Pigmente, Farbstoffe, optische Aufheller, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel oder Antifoggingmittel eingesetzt werden. In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat oder von Hydrotalciten und/oder Stabilisatoren aus der Gruppe der phenolischen Antioxidantien und der Phosphite und/oder Lichtstabilisatoren aus der Gruppe der gehinderten Amine (HALS) und/oder Dispergiermittel enthalten sind.

14. Verfahren zur Herstellung einer flammgeschützten Kunststoffzusammensetzung nach einem der Ansprüche 11 bis 13, bei dem
a) 0,1 bis 40 Gew.-Teile, bevorzugt 1 bis 25, besonders bevorzugt 2,5 bis 15 Gew.-Teile mindestens eines organischen Oxyimidsalzes, enthaltend mindestens ein Strukturelement der nachfolgend abgebildeten Formel I 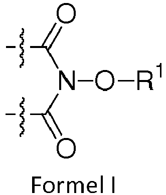 wobei R¹ ausgewählt ist aus der Gruppe bestehend aus anorganischen oder organischen Kationen.
b) vor, nach oder gleichzeitig mit 0 bis 25 Gew.-Teilen, bevorzugt 1 bis 20 Gew.-Teilen, besonders bevorzugt 2,5 bis 15 Gew.-Teilen mindestens eines weiteren Flammschutzmittels und/oder
c) vor, nach oder gleichzeitig mit 0 bis 25 Gew.-Teilen, bevorzugt 1 bis 20 Gew.-Teilen, besonders bevorzugt 2,5 bis 15 Gew.-Teilen mindestens einer phosphorhaltigen Verbindung
in 60 bis 99,9 Gew.-Teile, bevorzugt 60 bis 98, besonders bevorzugt 70 bis 95 Gew.-Teile mindestens eines Kunststoffes, insbesondere mindestens eines thermoplastischen Polymers eingebracht wird.

15. Formteil, Lack oder Beschichtung, herstellbar aus einer flammgeschützten Kunststoffzusammensetzung nach einem der Ansprüche 11 bis 13, insbesondere in Form von Spritzgussteilen, Folien, Beschichtungen, Schäumen, Fasern, Kabeln und Rohren, die über Extrusion, Spritzguss, Blasformen, Pressverfahren hergestellt werden z.B. für Haushalts- und Elektrogeräte, Fahrzeugteile, Konsumartikel, Möbel, Textilien.

## Claims

1. Use of organic oxyimide salts, comprising at least one structural element of subsequently illustrated formula I 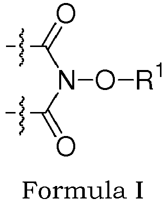 R¹ being selected from the group consisting of inorganic or organic cations,
as flame retardant for plastic materials.

2. Use according to claim 1, **characterised in that** the inorganic cations are selected from the group consisting of metal cations, preferably monovalent, bivalent or trivalent alkali metal cations, alkaline earth metal cations, transition metal cations and/or rare earth metal cations, in particular Na⁺, K⁺, Mg²⁺, Ca²⁺, Zn²⁺ and/or Al³⁺,
the organic cations are selected from the group consisting of nitrogen and/or phosphorus-containing organic cations, in particular ammonium-, melaminium- and/or phosphonium cations,
and also combinations of at least two different ones of the aforementioned cations and/or anions.

3. Use according to one of the preceding claims, **characterised in that** the organic oxyimide salt is halogen-free.

4. Use according to one of the preceding claims, **characterised in that** the organic oxyimide salt has the subsequent structure 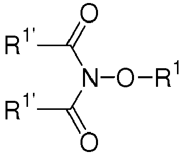 R¹ being defined as above and R^{1'}, upon each occurrence, being the same or different and representing a linear or branched alkyl radical, a linear or branched alkylene radical, an aromatic radical, a heteroaromatic radical or both radicals R^{1'} being joined to form a ring, the ring being able to saturated or unsaturated, substituted or unsubstituted and/or at least one or both radicals R^{1'} or the radicals R^{1'} joined to form a ring comprising at least one further structural element of the above illustrated formula I.

5. Use according to one of the preceding claims, **characterised in that** the organic oxyimide salt
a) comprises a structural element of the general formula I and has a structure according to one of the subsequent formulae 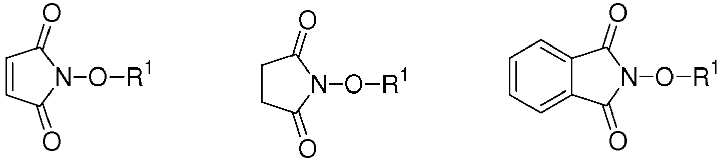 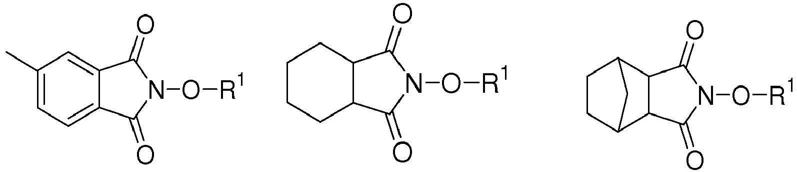 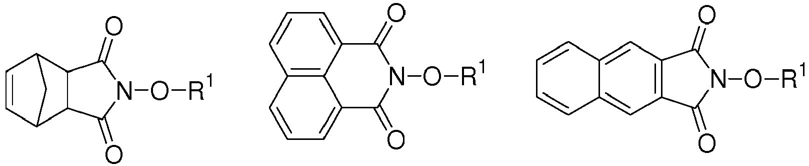 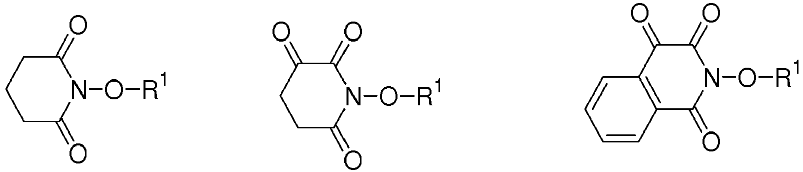 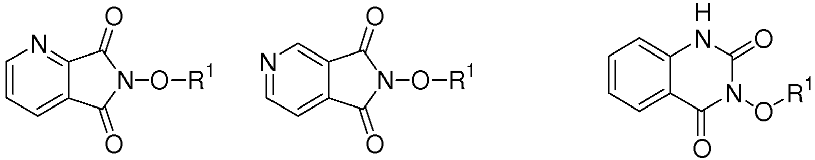 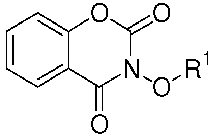
b) comprises two structural elements of the general formula I and has a structure according to one of the subsequent formulae 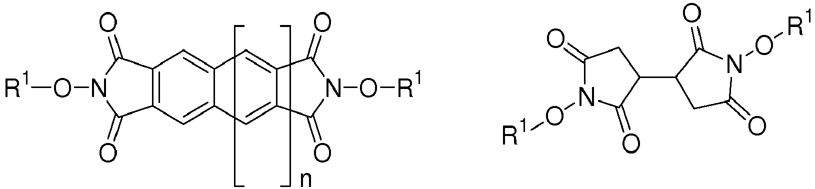 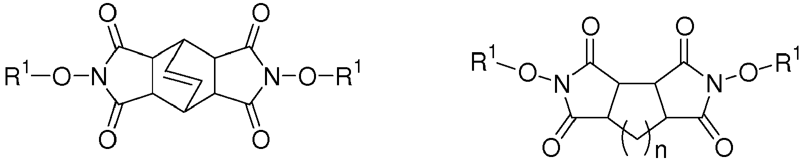 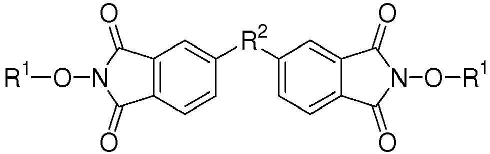 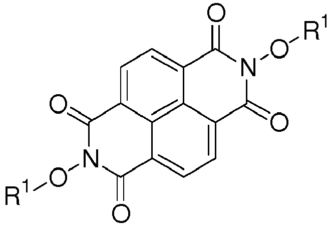
n meaning 0, 1, 2, 3 or 4, and
R² being selected from the group consisting of possibly substituted alkylene-, cycloalkylene-, arylene-, heteroarylene- or bridging acyl-radicals,
or
c) comprises three structural elements of the general formula I and has a structure according to the subsequent formula

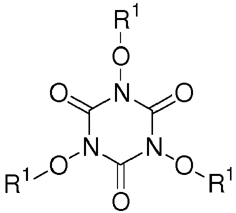

6. Use according to the preceding claim, **characterised in that** R² is selected from moieties of the group consisting of -(CH₂)ₙ-with n = 1 to 18, -CH(CH₃)-, -C(CH₃)₂-, -CH(CF₃)-, -O-, -S-,-SO₂-, -NHCO-, -CO-, -OC(O)O- and also the subsequently illustrated groups 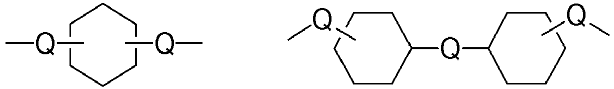 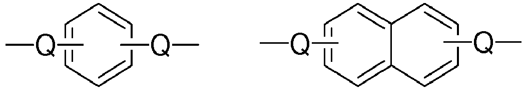 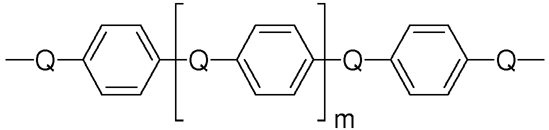 the cycloaliphatic or aromatic ring systems contained in the previously illustrated groups being unsubstituted or substituted by one or more alkyl- and/or alkoxy groups,
Q upon each occurrence, being the same or different and being selected from the group consisting of a chemical bond and also the moieties -(CH₂)ₙ- with n = 1 to 18, -CH(CH₃)-, -C(CH₃)₂-, -CH(CF₃)-, -C(CF₃)₂-, -O-, -S-, -SO₂-, -NHCO-, -CO-, -O-C(O)-O-, and
m being 0 or 1 to 3.

7. Use according to one of the preceding claims, **characterised in that** the plastic materials are thermoplastic polymers and selected in particular from the group consisting of
a) polymers made of olefins or diolefins, such as e.g. polyethylene (LDPE, LLDPE, VLDPE, ULDPE, MDPE, HDPE, UHMWPE), metallocene-PE (m-PE), polypropylene, polyisobutylene, poly-4-methylpentene-1, polybutadiene, polyisoprene, polycyclooctene, polyalkylene-carbon monoxide copolymers and also copolymers in the form of statistical or block structures, such as e.g. polypropylene-polyethylene (EP), EPM or EPDM, ethylene-vinyl acetate (EVA), ethylene-acrylester, such as e.g. ethylene-butylacrylate, ethylene-acrylic acid and the salts thereof (ionomers), and also terpolymers, such as e.g. ethylene-acrylic acid-glycidylacrylate, graft polymers, such as e.g. polypropylene-graft-maleic anhydride, polypropylene-graft-acrylic acid, polyethylene-graft-acrylic acid, polyethylene-polybutylacrylate-graft-maleic anhydride,
b) polystyrene, polymethylstyrene, polyvinylnaphthalene, styrene-butadiene (SB), styrene-butadiene-styrene (SBS), styrene-ethylene-butylene-styrene (SEBS), styrene-ethylenepropylene-styrene, styrene-isoprene, styrene-isoprene-styrene (SIS), styrene-butadiene-acrylonitrile (ABS), styreneacrylonitrile-acrylate (ASA), styrene-ethylene, styrene-maleic anhydride polymers including corresponding graft copolymers, such as e.g. styrene on butadiene, maleic anhydride on SBS or SEBS, and also graft copolymers made of methylmethacrylate, styrene-butadiene and ABS (MABS),
c) halogen-containing polymers, such as e.g. polyvinyl chloride (PVC), polychloroprene and polyvinylidene chloride (PVDC), copolymers made of vinyl chloride and vinylidene chloride, or made of vinyl chloride and vinyl acetate, chlorinated polyethylene, polyvinylidene fluoride,
d) polymers of unsaturated esters, such as e.g. polyacrylates and polymethacrylates, such as polymethylmethacrylate (PMMA), polybutylacrylate, polylaurylacrylate, polystearylacrylate, polyacrylonitrile, polyacrylamides, and also copolymers, such as e.g. polyacrylonitrile-polyalkylacrylate, hereof,
e) polymers made of unsaturated alcohols and derivatives, such as e.g. polyvinyl alcohol, polyvinyl acetate, polyvinyl butyral,
f) polyacetals, such as e.g. polyoxymethylene (POM) or copolymers hereof, with e.g. butanal,
g) polyphenylene oxides and blends with polystyrene or polyamides,
h) polymers of cyclic ethers, such as e.g. polyethylene glycol, polypropylene glycol, polyethylene oxide, polypropylene oxide, polytetrahydrofuran,
i) polyurethanes made of hydroxy-terminated polyethers or polyesters and aromatic or aliphatic isocyanates, in particular linear polyurethanes, and also polyureas,
j) polyamides, such as e.g. polyamide-6, 6.6, 6.10, 4.6, 4.10, 6.12, 12.12, polyamide 11, polyamide 12 and also (partially) aromatic polyamides, such as e.g. polyphthalamides, e.g. produced from terephthalic acid and/or isophthalic acid and aliphatic diamines or from aliphatic dicarboxylic acids, such as e.g. adipic acid or sebacic acid, and aromatic diamines, such as e.g. 1,4- or 1,3-diaminobenzene, blends of different polyamides, such as e.g. PA-6 and PA 6.6 or blends of polyamides and polyolefins, such as e.g. PA/PP,
k) polyimides, polyamideimides, polyetherimides, polyesterimides, poly(ether)ketones, polysulfones, polyethersulfones, polyarylsulfones, polyphenylenesulfides, polybenzimidazoles, polyhydantoins,
l) polyesters made of aliphatic or aromatic dicarboxylic acids and diols or made of hydroxycarboxylic acids, such as e.g. polyethylene terephthalate (PET), polybutylene terephthalate (PBT), polypropylene terephthalate, polyethylene naphthylate, poly-1,4-dimethylolcyclohexane terephthalate, polyhydroxybenzoate, polyhydroxynaphthalate, polylactic acid,
m) polycarbonates, polyestercarbonates and also blends, such as e.g. PC/ABS, PC/PBT, PC/PET/PBT, PC/PA,
n) cellulose derivatives, such as e.g. cellulose nitrate, cellulose acetate, cellulose propionate, cellulose butyrate,
o) elastomeric, non-thermoplastic or duroplastic plastic materials,
p) and also mixtures, combinations or blends of two or more of the previously mentioned polymers.

8. Use according to one of the preceding claims, **characterised in that** the organic oxyimide salts are used in combination with at least one further flame retardant, selected from the group consisting of
a) inorganic flame retardants, such as e.g. Al(OH)₃, Mg(OH)₂, AlO(OH), MgCO₃, layer silicates, such as e.g. montmorillonite or sepiolite, non- or organically modified, double salts, such as e.g. Mg-Al silicates, POSS (Polyhedral Oligomeric Silsesquioxane) compounds, huntite, hydromagnesite or halloysite and also Sb₂O₃, Sb₂O₅, MoO₃, zinc stannate, zinc hydroxystannate,
b) nitrogen-containing flame retardants, such as e.g. melamine, melem, melam, melon, melamine derivatives, melamine condensation products or melamine salts, benzoguanamine, polyisocyanurates, allantoin, (poly)phosphacenes, in particular melamine cyanurate, melamine phosphate, dimelamine phosphate, melamine pyrophosphate, melamine polyphosphate, melamine-methane phosphonate, melamine-metal phosphates, such as e.g. melamine aluminium phosphate, melamine zinc phosphate, melamine magnesium phosphate, and also the corresponding pyrophosphates and polyphosphates, poly-[2,4-(piperazin-1,4,-yl]-6-(morpholin-4-yl)3,5-triazine], ammonium polyphosphate, melamine borate, melamine hydrobromide, ethylene diamine methane phosphate,
c) radical formers, such as e.g. alkoxyamines, hydroxylamine esters, azo compounds, dicumyl or polycumyl, hydroxyimides or the derivatives thereof, such as e.g. hydroxyimide ester or hydroxyimide ether,
d) phosphorus-containing flame retardants, such as e.g. inorganic or organic phosphonates, such as e.g. aluminium phosphonate, phosphonate ester, oligomeric and polymeric derivatives of methane phosphonic acid, red phosphorus, phosphates, such as e.g. resorcin diphosphate, bisphenol-A-diphosphate and the oligomers thereof, triphenylphosphate, ethylene diamine diphosphate, phosphinates, such as e.g. salts of hypophosphorous acid and the derivatives thereof, such as alkyl phosphinate salts, e.g. diethylphosphinate aluminium or diethylphosphinate zinc or aluminium phosphinate, aluminium phosphite, aluminium phosphate, 9,10-dihydro-9-oxa-10-phosphorylphenanthrene-10-oxide (DOPO) and the substituted compounds thereof,
e) halogen-containing flame retardants based on chlorine and bromine, such as e.g. polybrominated diphenyl oxides, such as e.g. decabromodiphenyl oxide, tris(3-bromo-2,2-bis(bromomethyl)propylphosphate, tris(tribromoneopentyl)phosphate, tetrabromophthalic acid, 1,2-bis (tribromophenoxy)ethane, hexabromocyclododecane, brominated diphenylethane, tris-(2,3,-dibromopropyl)isocyanurate, tetrabromobisphenol-A-bis(2,3)dibromopropylether), ethylenebis(tetrabromophthalimide), tetrabromo-bisphenol A, brominated polystyrene, brominated polybutadiene or polystyrene-brominated polybutadiene copolymers, brominated epoxy resin, polypentabromobenzylacrylate, brominated polyphenylene ether, possibly in combination with Sb₂O₃ and/or Sb₂O₅,
f) borates, such as e.g. zinc borate or calcium borate,
g) sulfur-containing compounds, such as e.g. elementary sulfur, disulfides und polysulfides, thiuram sulfide, dithiocarbamates, mercaptobenzothiazole and sulfenamides,
h) antidrip agents, such as e.g. polytetrafluorethylene,
i) silicon-containing compounds, such as e.g. polyphenylsiloxanes,
and also combinations or mixtures hereof.

9. Use according to the preceding claim, **characterised in that** the radical formers are thereby selected from the group consisting of
a) N-alkoxyamines according to the subsequently illustrated structural formula, 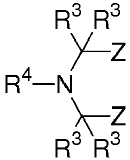
R³ standing for hydrogen or a possibly substituted alkyl-, cycloalkyl-, aryl-, heteroaryl- or acyl-radical, in particular being a C1 to C4 alkyl-radical,
R⁴ standing for an alkoxy-, aryloxy-, cycloalkoxy-, aralkoxy- or acyloxy-radical,
Z standing for hydrogen or a possibly substituted alkyl-, cycloalkyl-, aryl-, heteroaryl- or acyl-radical, the two radicals Z also being able to form a closed ring which can be substituted possibly by ester-, ether-, amine-, amide-, carboxy- or urethane-groups,
b) azo compounds according to the subsequently illustrated structural formulae,
R⁵-N=N-R⁵
or 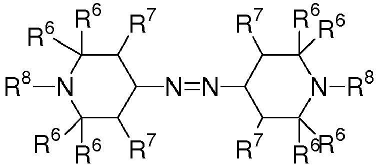
R⁵ meaning an alkyl-, cycloalkyl- or aryl-radical,
R⁶ upon each occurrence, being the same or different and meaning a linear or branched alkyl-radical,
R⁷ upon each occurrence, being the same or different and meaning hydrogen or a linear or branched alkyl-radical, and
R⁸ upon each occurrence, being the same or different and meaning an alkyl-, alkoxy-, aryloxy-, cycloalkyloxy-, aralkoxy- or acyloxy-radical,
c) dicumyl according to the subsequently illustrated structural formula 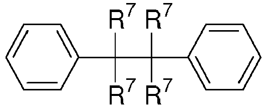
R⁷ having the previously indicated meaning, preferably being methyl,
d) and/or polycumyl according to the subsequently illustrated structural formula 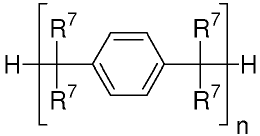
R⁷ having the previously indicated meaning, preferably being methyl, and 2 < n < 100.

10. Use according to one of the two preceding claims, **characterised in that** the organic oxyimide salts and the at least one further flame retardant are used in a weight ratio of 99 : 1 to 1 : 99, preferably of 5 : 95 to 50 : 50, particularly preferably of 10 : 90 to 30 : 70, and/or
are used in combination with at least one phosphorus-containing compound, in particular a phosphorus-containing compound selected from the group consisting of phosphites or phosphonites and/or
relative to the plastic materials, are used at 0.01 to 30% by weight, preferably at 0.1 to 20% by weight, particularly preferably at 1 to 10% by weight.

11. Flame-retardant plastic material composition, comprising or consisting of:
a) 60 to 99.9 parts by weight, preferably 60 to 98, particularly preferably 70 to 95 parts by weight, of at least one plastic material, in particular of at least one thermoplastic polymer,
b) 0.1 to 40 parts by weight, preferably 1 to 25, particularly preferably 2.5 to 15 parts by weight, of at least one organic oxyimide salt, comprising at least one structural element of the subsequently illustrated formula I, 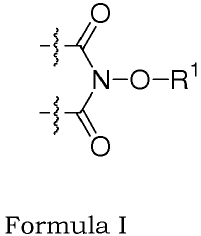 R¹ being selected from the group consisting of inorganic or organic cations,
c) 0 to 25 parts by weight, preferably 1 to 20 parts by weight, particularly preferably 2.5 to 15 parts by weight, of at least one further flame retardant, the flame retardant being in particular a phosphonate or a (poly)phosphacene or combinations hereof, and also
d) 0 to 25 parts by weight, preferably 1 to 20 parts by weight, particularly preferably 2.5 to 15 parts by weight, of at least one further phosphorus-containing compound.

12. Flame-retardant plastic material composition according to the preceding claim, **characterised in that**, in addition, there are comprised
a) up to 40 parts by weight of at least one reinforcing- or filling material and/or
b) up to 5 parts by weight of at least one additive from the class of phenolic antioxidants, phosphites, acid collectors, hindered amines, dispersants and also combinations hereof.

13. Flame-retardant plastic material composition according to one of the two preceding claims, **characterised in that** additives, selected from the group consisting of UV absorbers, light stabilisers, stabilisers, hydroxylamines, benzofuranones, nucleation agents, impact strength enhancers, plasticisers, lubricants, rheology modifiers, processing aids, pigments, colourants, optical brighteners, antimicrobial active substances, antistatic agents, slip agents, antiblocking agents, coupling means, dispersants, compatibilisers, oxygen collectors, acid collectors, marking means or anti-fogging means are used. In a preferred embodiment, the compositions comprise in particular acid collectors, e.g. based on salts of long-chain acids, such as e.g. calcium stearate, magnesium stearate, zinc stearate, calcium lactate or of hydrotalcites and/or stabilisers from the group of phenolic antioxidants and phosphites and/or light stabilisers from the group of hindered amines (HALS) and/or dispersants.

14. Method for the production of a flame-retardant plastic material composition according to one of the claims 11 to 13, in which there is introduced
a) 0.1 to 40 parts by weight, preferably 1 to 25, particular preferably 2.5 to 15 parts by weight, of at least one organic oxyimide salt, comprising at least one structural element of the subsequently illustrated formula I, 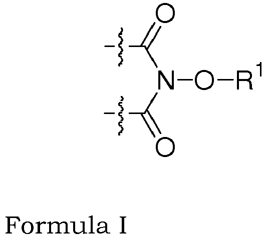 R¹ being selected from the group consisting of inorganic or organic cations,
b) before, after or at the same time, with 0 to 25 parts by weight, preferably 1 to 20 parts by weight, particularly preferably 2.5 to 15 parts by weight, of at least one further flame retardant and/or
c) before, after or at the same, with 0 to 25 parts by weight, preferably 1 to 20 parts by weight, particularly preferably 2.5 to 15 parts by weight, of at least one phosphorus-containing compound,
in 60 to 99.9 parts by weight, preferably 60 to 98, particularly preferably 70 to 95 parts by weight, of at least one plastic material, in particular of at least one thermoplastic polymer.

15. Moulded part, paint or coating producible from a flame-retardant plastic material composition according one of the claims 11 to 13, in particular in the form of injection moulded parts, foils, coatings, foams, fibres, cables and pipes, which are produced by extrusion, injection moulding, blow-moulding, pressing processes, e.g. for household and electrical appliances, vehicle parts, consumer articles, furniture, textiles.

## Revendications

1. Utilisation de sels d'oxyimides organiques contenant au moins un élément structural ayant la formule I représentée ci-après 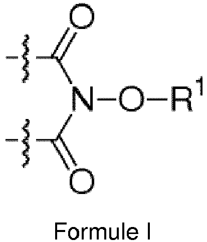 R¹ étant choisi dans le groupe consistant en les cations inorganiques ou organiques, en tant qu'agents retardateurs de flamme pour matières plastiques.

2. Utilisation selon la revendication 1, **caractérisée en ce que** les cations inorganiques sont choisis dans le groupe consistant en les cations métalliques, de préférence les cations de métaux alcalins, les cations de métaux alcalino-terreux, les cations de métaux de transition et/ou les cations de métaux des terres rares, monovalents, divalents ou trivalents, en particulier Na⁺, K⁺, Mg²⁺, Ca²⁺, Zn²⁺ et/ou Al³⁺,
les cations organiques sont choisis dans le groupe consistant en les cations organiques contenant de l'azote et/ou du phosphore, en particulier les cations ammonium, mélaminium et/ou phosphonium,
ainsi que les combinaisons d'au moins deux différents cations et/ou anions parmi ceux mentionnés ci-dessus.

3. Utilisation selon l'une des revendications précédentes, **caractérisée en ce que** le sel d'oxyimide organique est non halogéné.

4. Utilisation selon l'une des revendications précédentes, **caractérisée en ce que** le sel d'oxyimide organique présente la structure suivante 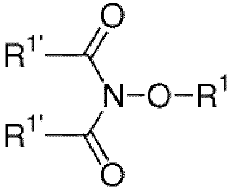 dans laquelle R¹ est tel que défini ci-dessus, et R¹', à chaque occurrence, est identique ou différent, et représente un radical alkyle à chaîne droite ou ramifiée, un radical alkylène à chaîne droite ou ramifiée, un radical aromatique, un radical hétéroaromatique, ou les deux radicaux R¹' sont reliés pour former un cycle, le cycle pouvant être saturé ou insaturé, substitué ou non substitué, et/ou au moins l'un des radicaux R¹', ou les deux, ou les radicaux R¹' reliés pour former un cycle, comprennent au moins un élément structural supplémentaire ayant la formule I présentée ci-dessus.

5. Utilisation selon l'une des revendications précédentes, **caractérisée en ce que** le sel d'oxyimide organique
a) comprend un élément structural de formule générale I et présente une structure selon l'une des formules suivantes 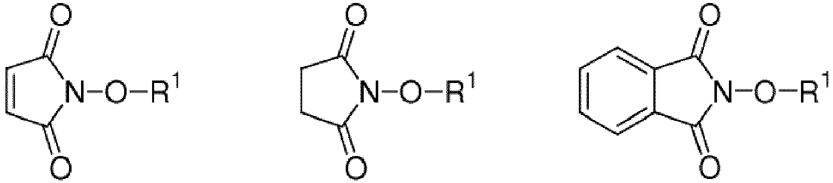 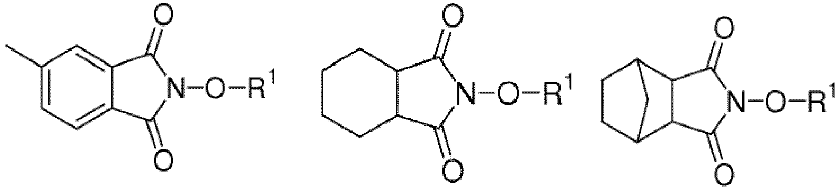 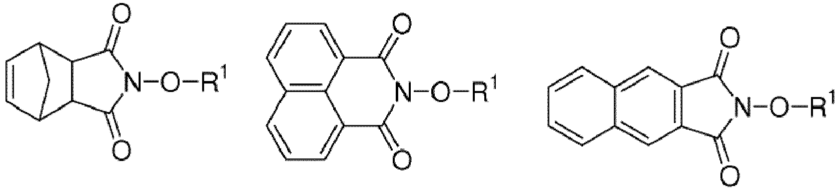 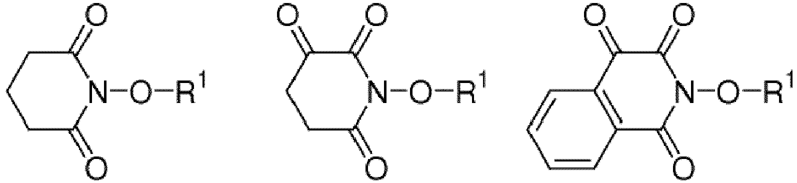 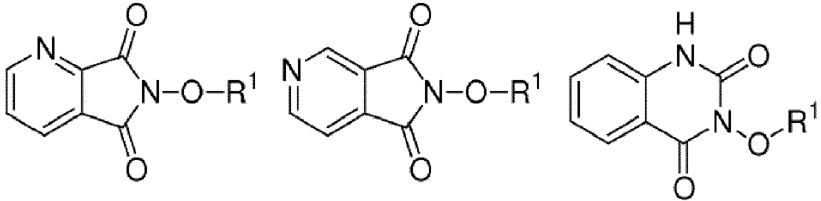 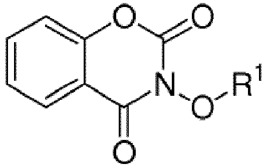
b) comprend deux éléments structuraux de formule générale I et présente une structure selon l'une des formules suivantes 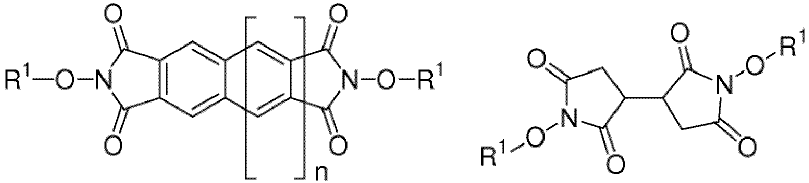 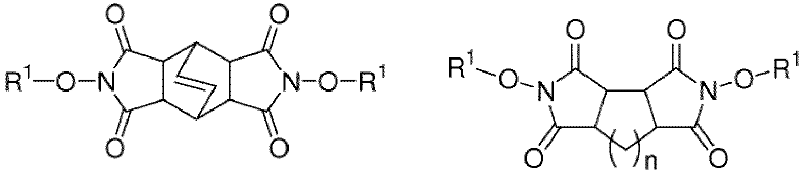 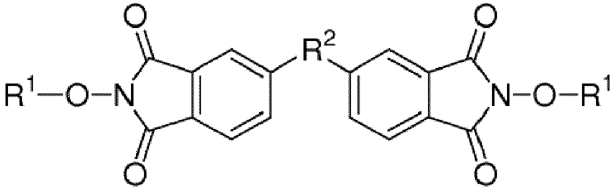 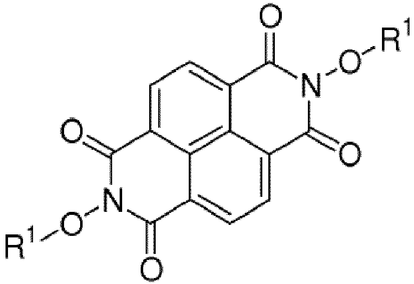 dans lesquelles
n vaut 0, 1, 2, 3 ou 4, et
R² est choisi dans le groupe consistant en les radicaux alkylène, cycloalkylène, arylène, hétéroarylène ou acyle pontant, éventuellement substitués,
ou
c) comprend trois éléments structuraux de formule générale I et présente une structure selon la formule suivante

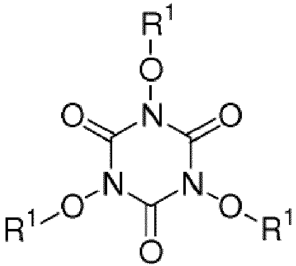

6. Utilisation selon la revendication précédente, **caractérisée en ce que** R² est choisi parmi les radicaux du groupe consistant en -(CH₂)ₙ-, avec n = 1 à 18, -CH(CH₃)-,-C(CH₃)₂-, -CH(CF₃)-, -O-, -S-, -SO₂-, -NHCO-, -CO-, -OC(O)O-, ainsi que les groupes présentés ci-après 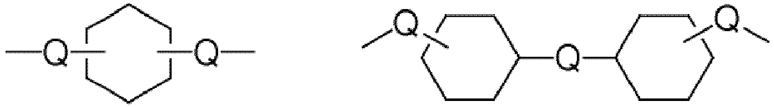 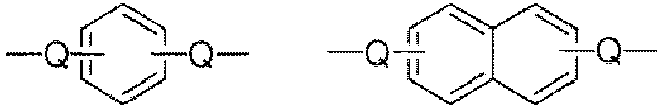 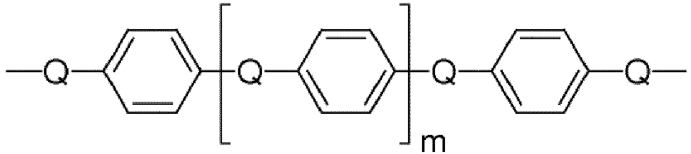 dans lesquels
les systèmes cycliques cycloaliphatiques ou aromatiques contenus dans les groupes présentés ci-dessus sont non substitués, ou substitués par un ou plusieurs groupes alkyle et/ou alcoxy,
Q à chaque occurrence, est identique ou différent, et est choisi dans le groupe consistant en une liaison chimique, ainsi qu'en les radicaux -(CH₂)ₙ-, avec n = 1 à 18, -CH(CH₃)-, -C(CH₃)₂-, -CH(CF₃)-, -O-, -S-, -SO₂-, -NHCO-, -CO-, -OC(O)O-, et
m vaut 0 ou 1 à 3.

7. Utilisation selon l'une des revendications précédentes, **caractérisée en ce que** les matières plastiques sont des polymères thermoplastiques et sont en particulier choisis dans le groupe consistant en
a) les polymères d'oléfines ou de dioléfines, tels que par exemple le polyéthylène (PEBD, PEBDL, VLDPE, ULDPE, MDPE, PEHD, UHMWPE), le métallocène-PE (m-PE), le polypropylène, le polyisobutylène, le poly-4-méthyl-pentène-1, le polybutadiène, le polyisoprène, le polycyclooctène, les copolymères polyalkylène-monoxyde de carbone, ainsi que les copolymères sous forme de structures statistiques ou en blocs, tels que par exemple le polypropylène-polyéthylène (EP), l'EPM ou l'EPDM, l'éthylène-acétate de vinyle (EVA), les éthylène-esters de l'acide acrylique tels que par exemple l'éthylène-acrylate de butyle, l'éthylène-acide acrylique et les sels (ionomères) de ceux-ci, ainsi que les terpolymères tels que par exemple l'éthylène-acide acrylique-acrylate de glycidyle, les polymères greffés tels que par exemple le polypropylène-greffé-anhydride maléique, le polypropylène-greffé-acide acrylique, le polyéthylène-greffé-acide acrylique, le polyéthylène-poly(acrylate de butyle)-greffé-anhydride maléique,
b) le polystyrène, le polyméthylstyrène, le polyvinylnaphtalène, les polymères styrène-butadiène (SB), styrène-butadiène-styrène (SBS), styrène-éthylène-butylène-styrène (SEBS), styrène-éthylène-propylène-styrène, styrène-isoprène, styrène-isoprène-styrène (SIS), styrène-butadiène-acrylonitrile (ABS), styrène-acrylonitrile-acrylate (ASA), styrène-éthylène, styrène-anhydride maléique, y compris les copolymères greffés correspondants tels que par exemple styrène sur butadiène, anhydride maléique sur SBS ou SEBS, ainsi que les copolymères greffés constitués de méthacrylate de méthyle, de styrène-butadiène et d'ABS (MABS),
c) les polymères halogénés tels que par exemple le poly(chlorure de vinyle) (PVC), le polychloroprène et le poly(chlorure de vinylidène) (PVDC), les copolymères de chlorure de vinyle et de chlorure de vinylidène ou de chlorure de vinyle et d'acétate de vinyle, le polyéthylène chloré, le poly(fluorure de vinylidène),
d) les polymères d'esters insaturés tels que par exemple les polyacrylates et les polyméthacrylates tels que le poly(méthacrylate de méthyle) (PMMA), le poly(acrylate de butyle), le poly(acrylate de lauryle), le poly(acrylate de stéaryle), le polyacrylonitrile, les polyacrylamides, ainsi que les copolymères tels que par exemple le polyacrylonitrile-poly(acrylate d'alkyle),
e) les polymères d'alcools insaturés et de leurs dérivés, tels que par exemple le poly(alcool vinylique), le poly(acétate de vinyle), le polyvinylbutyral,
f) les polyacétals, tels que par exemple le polyoxyméthylène (POM) ou leurs copolymères avec par exemple le butanal,
g) les poly(oxydes de phénylène) et les mélanges mécaniques avec le polystyrène ou les polyamides,
h) les polymères d'éthers cycliques tels que le polyéthylèneglycol, le polypropylèneglycol, le poly(oxyde d'éthylène), le poly(oxyde de propylène), le polytétrahydrofuranne,
i) les polyuréthannes, obtenus à partir de polyéthers ou de polyesters à terminaison hydroxy et d'isocyanates aromatiques ou aliphatiques, en particulier les polyuréthannes linéaires, ainsi que les polyurées,
j) les polyamides tels que par exemple les polyamides-6, 6.6, 6.10, 4.6, 4.10, 6.12, 12.12, le polyamide 11, le polyamide 12, ainsi que les polyamides (partiellement) aromatiques tels que par exemple les polyphtalamides, fabriqués par exemple à partir d'acide téréphtalique et/ou d'acide isophtalique et de diamines aliphatiques, ou à partir d'acides dicarboxyliques aliphatiques tels que par exemple l'acide adipique ou l'acide sébacique et de diamines aromatiques telles que par exemple le 1,4- ou le 1,3-diaminobenzène, les mélanges mécaniques de différents polyamides, tels que par exemple le PA-6 et le PA 6.6, ou les mélanges mécaniques de polyamides et de polyoléfines, tels que par exemple le PA/PP,
k) les polyimides, les polyamide-imides, les polyétherimides, les polyesterimides, les poly(éther)cétones, les polysulfones, les polyéthersulfones, les polyarylsulfones, les poly(sulfures de phénylène), les polybenzimidazoles, les polyhydantoïnes,
l) les polyesters obtenus à partir d'acides dicarboxyliques aliphatiques ou aromatiques et de diols ou d'acides hydroxycarboxyliques tels que par exemple le poly(téréphtalate d'éthylène) (PET), le poly(téréphtalate de butylène) (PBT), le poly(téréphtalate de propylène), le poly(naphtylate d'éthylène), le poly(téréphtalate de 1,4-diméthylolcyclohexane), le poly(hydroxybenzoate), le poly(hydroxynaphtalate), le poly(acide lactique),
m) les polycarbonates, les polyestercarbonates, ainsi que les mélanges mécaniques tels que par exemple le PC/ABS, le PC/PBT, le PC/PET/PBT, le PC/PA,
n) les dérivés de la cellulose tels que par exemple le nitrate de cellulose, l'acétate de cellulose, le propionate de cellulose, le butyrate de cellulose,
o) les matières plastiques élastomères non thermoplastiques ou thermodurcissables,
p) ainsi que les mélanges, combinaisons ou mélanges mécaniques de deux des polymères mentionnés ci-dessus, ou plus.

8. Utilisation selon l'une des revendications précédentes, **caractérisée en ce que** les sels d'oxyimides organiques sont utilisés en combinaison avec au moins un retardateur de flamme supplémentaire, de préférence choisi dans le groupe consistant en
a) les retardateurs de flamme inorganiques tels que Al(OH)₃, Mg(OH)₂, AIO(OH), MgCO₃, les phyllosilicates tels que par exemple la montmorillonite ou la sépiolite, non modifiée ou à modification organique, les sels doubles tels que par exemple les silicates de Mg-AI, les composés POSS-(silsesquioxanes oligomères polyédriques), la huntite, l'hydromagnésite ou la halloysite, ainsi que Sb₂O₃, Sb₂O₅, MoO₃, le stannate de zinc, l'hydroxystannate de zinc,
b) les retardateurs de flamme azotés tels que par exemple la mélamine, le mélem, le mélam, le mélon, les dérivés de la mélamine, les produits de condensation de la mélamine ou les sels de mélamine, la benzoguanamine, les polyisocyanurates, l'allantoïne, les (poly)phosphacènes, en particulier le cyanurate de mélamine, le phosphate de mélamine, le phosphate de dimélamine, le pyrophosphate de mélamine, le polyphosphate de mélamine, le méthanophosphonate de mélamine, les phosphates de mélamine et de métaux tels que par exemple le phosphate de mélamine-aluminium, le phosphate de mélamine-zinc, le phosphate de mélamine-magnésium, ainsi que les pyrophosphates et les polyphosphates correspondants, la poly[2,4-(pipérazin-1,4-yl)-6-(morpholin-4-yl)-1,3,5-triazine], le polyphosphate d'ammonium, le borate de mélamine, le bromhydrate de mélamine, le méthanephosphonate d'éthylènediamine,
c) les générateurs de radicaux, tels que par exemple les alcoxyamines, les esters d'hydroxylamines, les composés azoïques, le dicumyle ou le polycumyle, les hydroxyimides ou leurs dérivés, tels que par exemple les esters d'hydroxyimide ou les hydroxyimide-éthers,
d) les retardateurs de flamme phosphorés, tels que par exemple les phosphonates inorganiques ou organiques, tels que par exemple le phosphonate d'aluminium, les esters phosphonates, les dérivés oligomères et polymères de l'acide méthanephosphonique, le phosphore rouge, les phosphates tels que par exemple le diphosphate de résorcinol, le diphosphate de bisphénol A et leurs oligomères, le phosphate de triphényle, le diphosphate d'éthylènediamine, les phosphinates tels que par exemple les sels de l'acide hypophosphoreux et leurs dérivés tels que les sels phosphinates d'alkyle, par exemple le phosphinate de diéthylaluminium ou le phosphinate de diéthyl-zinc ou le phosphinate d'aluminium, le phosphite d'aluminium, le phosphate d'aluminium, l'oxyde de 9,10-dihydro-9-oxa-10-phosphorylphénanthrène-10 (DOPO) et ses composés substitués,
e) les retardateurs de flamme halogénés à base de chlore et de brome, tels que par exemple les oxydes de diphényle polybromés, tels que par exemple l'oxyde de décabromodiphényle, le phosphate de tris(3-bromo-2,2-bis(bromométhyl)propyle, le phosphate de tris(tribromonéopentyle), l'acide tétrabromophtalique, le 1,2-bis(tribromophénoxy)éthane, l'hexabromocyclododécane, le diphényléthane bromé, l'isocyanurate de tris(2,3-dibromopropyle), l'éther bis(2,3)dibromopropylique du tétrabromobisphénol A, l'éthylène-bis(tétrabromophtalimide), le tétrabromo-bisphénol A, le polystyrène bromé, le polybutadiène bromé ou les copolymères de polybutadiène et de polystyrène bromé, une résine époxyde bromée, le poly(acrylate de pentabromobenzyle), le poly(phénylène éther) bromé, éventuellement en combinaison avec du Sb₂O₃ et/ou du Sb₂O₅,
f) les borates, tels que par exemple le borate de zinc ou le borate de calcium,
g) les composés sulfurés, tels que par exemple le soufre élémentaire, les disulfures et les polysulfures, le sulfure de thiurame, les dithiocarbamates, le mercaptobenzothiazole et les sulfénamides,
h) les agents anti-goutte, tels que par exemple le polytétrafluoréthylène,
i) les composés contenant du silicium, tels que par exemple les polyphénylsiloxanes, ainsi que les combinaisons et mélanges de ceux-ci.

9. Utilisation selon la revendication précédente, **caractérisée en ce que** le générateur de radicaux est choisi dans le groupe consistant en
a) les N-alcoxylamines selon la formule développée présentée ci-après 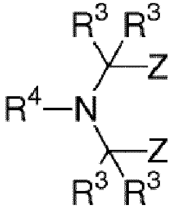 dans laquelle
R³ représente un atome d'hydrogène ou un radical alkyle, cycloalkyle, aryle, hétéroaryle ou acyle éventuellement substitué, en particulier un radical alkyle en C1 à C4,
R⁴ représente un radical alcoxy, aryloxy, cycloalcoxy, aralcoxy ou acyloxy,
Z représente un atome d'hydrogène ou un radical alkyle, cycloalkyle, aryle, hétéroaryle ou acyle éventuellement substitué, les deux radicaux Z pouvant aussi former un cycle fermé, qui peut éventuellement être substitué par des groupes ester, éther, amine, amide, carboxy ou uréthanne,
b) les composés azoïques selon les formules développées représentées ci-après :
R⁵-N=N-R⁵
ou 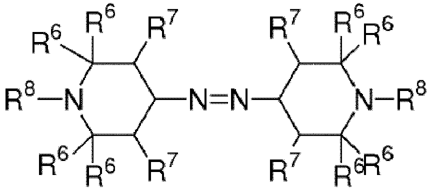 dans lesquelles
R⁵ est un radical alkyle, cycloalkyle ou aryle,
R⁶ à chaque occurrence, est identique ou différent, et représente un radical alkyle à chaîne droite ou ramifiée,
R⁷ à chaque occurrence, est identique ou différent, et représente un atome d'hydrogène ou un radical alkyle à chaîne droite ou ramifiée, et
R⁸ à chaque occurrence, est identique ou différent, et représente un radical alkyle, alcoxy, aryloxy, cycloalkyloxy, aralcoxy ou acyloxy,
c) les dicumyles selon la formule développée représentée ci-après 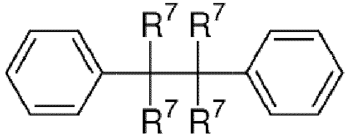 dans laquelle R⁷ a les significations données ci-dessus, de préférence représente le groupe méthyle,
d) et/ou les polycumyles selon la formule développée représentée ci-après 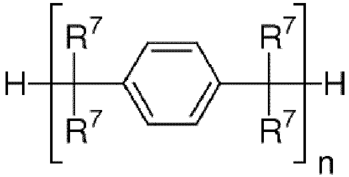 dans laquelle R⁷ a les significations données ci-dessus, de préférence représente le groupe méthyle, et 2 < n < 100.

10. Utilisation selon l'une des deux revendications précédentes, **caractérisée en ce que** les sels d'oxyimides organiques et le ou les retardateurs de flamme supplémentaires sont utilisés selon un rapport en poids de 99:1 à 1:99, de préférence de 5:95 à 50:50, d'une manière particulièrement préférée de 10:90 à 30:70 et/ou
sont utilisés en combinaison avec au moins un composé phosphoré, en particulier un composé phosphoré choisi dans le groupe consistant en les phosphites ou les phosphonites, et/ou
sont utilisés en des quantités, par rapport aux matières plastiques, de 0,01 à 30 % en poids, de préférence de 0,1 à 20 % en poids, d'une manière particulièrement préférée de 1 à 10 % en poids.

11. Composition de plastiques ignifugée, contenant, ou étant constituée de
a) 60 à 99,9 parties en poids, de préférence 60 à 98, d'une manière particulièrement préférée 70 à 95 parties en poids d'au moins un plastique, en particulier d'au moins un polymère thermoplastique,
b) 0,1 à 40 parties en poids, de préférence 1 à 25, d'une manière particulièrement préférée 2,5 à 15 parties en poids d'au moins un sel d'oxyimide organique, contenant au moins un élément structural ayant la formule I présentée ci-après 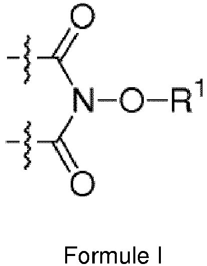 dans laquelle R¹ est choisi dans le groupe consistant en les cations inorganiques ou organiques,
c) 0 à 25 parties en poids, de préférence 1 à 20 parties en poids, d'une manière particulièrement préférée 2,5 à 15 parties en poids d'au moins un retardateur de flamme supplémentaire, le retardateur de flamme étant en particulier un phosphonate ou un (poly)phosphacène, ou des combinaisons de ceux-ci, ainsi que
d) 0 à 25 parties en poids, de préférence 1 à 20 parties en poids, d'une manière particulièrement préférée 2,5 à 15 parties en poids d'au moins un composé phosphoré.

12. Composition de plastiques ignifugée selon la revendication précédente, **caractérisée en ce qu'**elle contient en outre
a) jusqu'à 40 parties en poids d'au moins un agent de renforcement ou d'une charge, et/ou
b) jusqu'à 5 parties en poids d'au moins un additif de la classe des antioxydants phénoliques, des phosphines, des fixateurs d'acide, des amines à empêchement stérique, des dispersants ou des combinaisons de ceux-ci,

13. Composition de plastiques ignifugée selon l'une des deux revendications précédentes, **caractérisée en ce que** les additifs sont choisis dans le groupe consistant en les absorbants UV, les photostabilisants, les stabilisants, les hydroxylamines, les benzofurannones, les agents de nucléation, les agents améliorant la résistance au choc, les plastifiants, les lubrifiants, les agents modifiant la rhéologie, les auxiliaires de mise en oeuvre, les pigments, les colorants, les azurants optiques, les matières actives antimicrobiennes, les antistatiques, les agents de glissement, les agents anti-adhérence de contact, les agents de couplage, les dispersants, les agents de compatibilisation, les fixateurs d'oxygène, les fixateurs d'acides, les agents de marquage ou les agents antivoile. Dans une forme de réalisation préférée, les compositions contiennent en particulier des fixateurs d'acides, par exemple à base de sels d'acides à longue chaîne tels que par exemple le stéarate de calcium, le stéarate de magnésium, le stéarate de zinc, le lactate de calcium, ou d'hydrotalcites et/ou des stabilisants du groupe des antioxydants phénoliques et des phosphites et/ou des photostabilisants du groupe des amines à empêchement stérique (HALS) et/ou des dispersants.

14. Procédé de fabrication d'une composition de plastiques ignifugée selon l'une des revendications 11 à 13, dans lequel on introduit
a) 0,1 à 40 parties en poids, de préférence 1 à 25, d'une manière particulièrement préférée 2,5 à 15 parties en poids d'au moins un sel d'oxyimide organique contenant au moins un élément structural ayant la formule I présentée ci-après 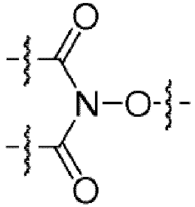 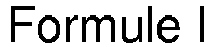 dans laquelle R¹ est choisi dans le groupe consistant en les cations inorganiques ou organiques,
b) avant, après ou en même temps, 0 à 25 parties en poids, de préférence 1 à 20 parties en poids, d'une manière particulièrement préférée 2,5 à 15 parties en poids d'au moins un retardateur de flamme supplémentaire, et/ou
c) avant, pendant ou en même temps, 0 à 25 parties en poids, de préférence 1 à 20 parties en poids, d'une manière particulièrement préférée 2,5 à 15 parties en poids d'au moins un composé phosphoré,
dans 60 à 99,9 parties en poids, de préférence dans 60 à 98, d'une manière particulièrement préférée dans 70 à 95 parties en poids d'au moins un plastique, en particulier d'au moins un polymère thermoplastique.

15. Pièce moulée, vernis ou revêtement, pouvant être fabriqué à partir d'une composition de plastiques ignifugée selon l'une des revendications 11 à 13, en particulier sous forme de pièces moulées par injection, de feuilles, de revêtements, de mousses, de fibres, de câbles et de tubes, qui sont fabriqués par extrusion, moulage par injection, moulage par soufflage, pressage, par exemple pour les appareils ménagers et électriques, pour les éléments de véhicules, pour les articles de grande consommation, les meubles, les textiles.
